# EUROPEAN PATENT APPLICATION

(11) **EP 2 607 204 A2**
(43) Date of publication of application: **26.06.2013**
(21) Application number: 12198814.1
(22) Date of filing: 21.12.2012
(51) Int. Cl.: B62D 1/181

(54) **Steering apparatus**

(30) Priority: 21.12.2011 JP 2011280305; 21.12.2011 JP 2011280306; 21.12.2011 JP 2011280308; 21.12.2011 JP 2011280309
(71) Applicant: JTEKT CORPORATION, Osaka-shi Osaka 542-8502 (JP)
(72) Inventor: Masuda, Tomihide, Toyota-shi, Aichi 471-8572 (JP); Tanaka, Eiji, Osaka-shi, Osaka 542-8502 (JP)
(74) Representative: Winter, Brandl, Fürniss, Hübner, Röss, Kaiser, Polte - Partnerschaft

(57) **Abstract**

A steering apparatus (1) includes: a tilt angle adjustment mechanism (100); a telescopic mechanism (200); and a drive mechanism (4). The drive mechanism (4) includes: a rotating member (331) that is rotated by a motor (2); a transmission member (332) that is coupled to the tilt angle adjustment mechanism (100); and a selector mechanism (400) that changes a position of the rotating member (331). The rotating member (331) has a protrusion that protrudes toward the transmission member (332), and the transmission member (332) has a recess into which the protrusion is inserted. The selector mechanism (400) inserts the protrusion into the recess by moving the rotating member (331) to a coupling position, and removes the protrusion from the recess by moving the rotating member (331) to a non-coupling position.

## Description

### BACKGROUND OF THE INVENTION

### 1. Field of the Invention

The invention relates to a steering apparatus that includes a tilt mechanism that adjusts the position of a steering wheel in the up-down direction of a vehicle, a telescopic mechanism that adjusts the position of the steering wheel in the longitudinal direction of the vehicle, and a drive mechanism that drives at least one of the tilt mechanism and the telescopic mechanism. 2. Discussion of Background

Japanese Patent Application Publication No. 2007-91171 (JP 2007-91171 A) describes a steering apparatus that includes an electric tilt-telescopic steering column that uses a planetary gear mechanism. The planetary gear mechanism includes a sun gear, planetary gears and an internal gear. The rotation of an output shaft of a motor is transmitted to the sun gear. The planetary gears are connected to the telescopic mechanism. The internal gear has an external gear that is connected to a tilt angle adjustment mechanism. When the rotation of the motor is transmitted to the tilt angle adjustment mechanism, the revolution of the planetary gears is locked. On the other hand, when the rotation of the motor is transmitted to the telescopic mechanism, the rotation of the internal gear that has the external gear is locked.

However, the structure of the steering apparatus that uses the planetary gear mechanism is complicated, which may be a factor that increases the number of components and the size of the apparatus. In addition, the complicated structure may be a factor that increases the cost.

### SUMMARY OF THE INVENTION

The invention provides a steering apparatus in which power output from a motor is able to be transmitted to at least one of a tilt mechanism and a telescopic mechanism and transmission of the power output from the motor is able to be interrupted with a simple configuration.

According to a feature of an example of the invention, there is provided a steering apparatus including a tilt mechanism that adjusts a tilt angle of a steering shaft in an up-down direction of a vehicle, a telescopic mechanism that adjusts a telescopic position of the steering shaft in a longitudinal direction of the vehicle, and a drive mechanism that drives the tilt mechanism and the telescopic mechanism, wherein: the drive mechanism includes a motor, a rotating member that is rotated by torque of the motor, a rotation transmission member that is coupled to one of the tilt mechanism and the telescopic mechanism, and a selector mechanism that changes a position of the rotating member relative to the rotation transmission member; the rotating member is coupled to the rotation transmission member when the position of the rotating member relative to the rotation transmission member is a coupling position, and is separated from the rotation transmission member when the position of the rotating member relative to the rotation transmission member is a non-coupling position; one of the rotating member and the rotation transmission member has a protruded portion that protrudes toward the other one of the rotating member and the rotation transmission member, and the other one of the rotating member and the rotation transmission member has a recessed portion into which the protruded portion is inserted; and the selector mechanism inserts the protruded portion into the recessed portion by moving the rotating member located at the non-coupling position to the coupling position, and removes the protruded portion from the recessed portion by moving the rotating member located at the coupling position to the non-coupling position.

### BRIEF DESCRIPTION OF THE DRAWINGS

The foregoing and further objects, features and advantages of the invention will become apparent from the following description of example embodiments with reference to the accompanying drawings, wherein like numerals are used to represent like elements and wherein:
FIG. 1 is a view that shows the overall configuration of a steering apparatus according to an embodiment of the invention;
FIG. 2A is a side view that shows the entirety of the steering apparatus as viewed from a position on one side of the steering apparatus;
FIG. 2B is a side view that shows the entirety of the steering apparatus as viewed from a position on the other side of the steering apparatus;
FIG. 3 is a view that shows the configuration of the steering apparatus as viewed from the direction in which a steering shaft extends;
FIG. 4 is a sectional view that shows the sectional structure of a tilt angle adjustment mechanism;
FIG. 5 is a sectional view that shows the sectional structure of a telescopic mechanism;
FIG. 6 is a bottom view that shows part of the telescopic mechanism as viewed from a position below the telescopic mechanism;
FIG. 7 is an exploded perspective view of a selector mechanism;
FIG. 8 is a perspective view that shows the overall configuration of a power transmission device;
FIG. 9 is a perspective view that shows a support shaft and members provided on the support shaft;
FIG. 10A is a side view of a rotating member as viewed from a direction perpendicular to the axial direction;
FIG. 10B is a front view that shows a face of the rotating member, which faces a tilt rotation transmission member;
FIG. 10C is a back view that shows a face of the rotating member, which faces a telescopic rotation transmission member;
FIG. 11A is a front view that shows the front structure of a tilt angle adjustment mechanism coupling;
FIG. 11B is a side view that shows the side structure of the tilt angle adjustment mechanism coupling;
FIG. 12A is a front view that shows the front structure of a telescopic mechanism coupling;
FIG. 12B is a side view that shows the side structure of the telescopic mechanism coupling;
FIG. 13 is a view that shows the configuration of part of the power transmission device;
FIG. 14 is a view that schematically shows a state where, from among the tilt angle adjustment mechanism and the telescopic mechanism, only the tilt angle adjustment mechanism is driven;
FIG. 15 is a view that schematically shows a state where, from among the tilt angle adjustment mechanism and the telescopic mechanism, only the telescopic mechanism is driven;
FIG. 16 is a view that shows a state where the tilt angle adjustment mechanism and the telescopic mechanism are driven at the same time;
FIG. 17A to FIG. 17C are views showing a rotating member of a steering apparatus according to an alternative embodiment of the invention, wherein FIG. 17A is a side view of the rotating member as viewed from a direction perpendicular to the axial direction, FIG. 17B is a front view that shows a face of the rotating member, which faces the tilt rotation transmission member, and FIG. 17C is a back view that shows a face of the rotating member, which faces the telescopic rotation transmission member;
FIG. 18 is a view that schematically shows an engaged state where a rotating member is engaged with a rotation transmission member that transmits rotation of the rotating member to at least one of a tilt angle adjustment mechanism and a telescopic mechanism in a steering apparatus according to a comparative example;
FIG. 19 is a timing chart that shows a change in a first motor current and a change in a second motor current with respect to time;
FIG. 20 is a flowchart that shows the procedure of a tilt-telescopic changing process;
FIG. 21 is a timing chart that shows a change in a first motor current and a change in a second motor current with respect to time in a steering apparatus according to an alternative embodiment of the invention;
FIG. 22 is a timing chart that shows a change in a first motor current and a change in a second motor current in a steering apparatus according to an alternative embodiment of the invention;

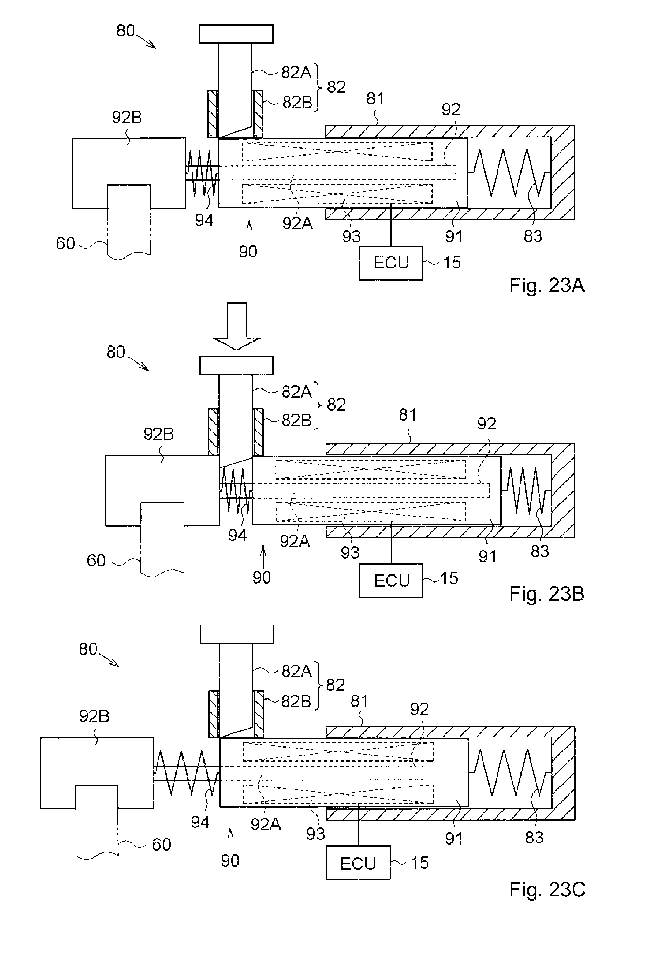

FIG. 23A to FIG. 23C are sectional views that shows the sectional structure of a selector mechanism of a steering apparatus according to an alternative embodiment of the invention, wherein FIG. 23A is a sectional view that shows the sectional structure of the selector mechanism at the time when a selector member is located at a third coupling position, FIG. 23B is a sectional view that shows the sectional structure of the selector mechanism at the time when the selector member is located at a first coupling position, and FIG. 23C is a sectional view that shows the sectional structure of the selector mechanism at the time when the selector member is located at a second coupling position; and
FIG. 24 is a flowchart that shows the procedure of a position changing process in a steering apparatus according to the alternative embodiment of the invention.

### DETAILED DESCRIPTION OF EMBODIMENTS

Hereinafter, embodiments of the invention will be described with reference to the accompanying drawings.

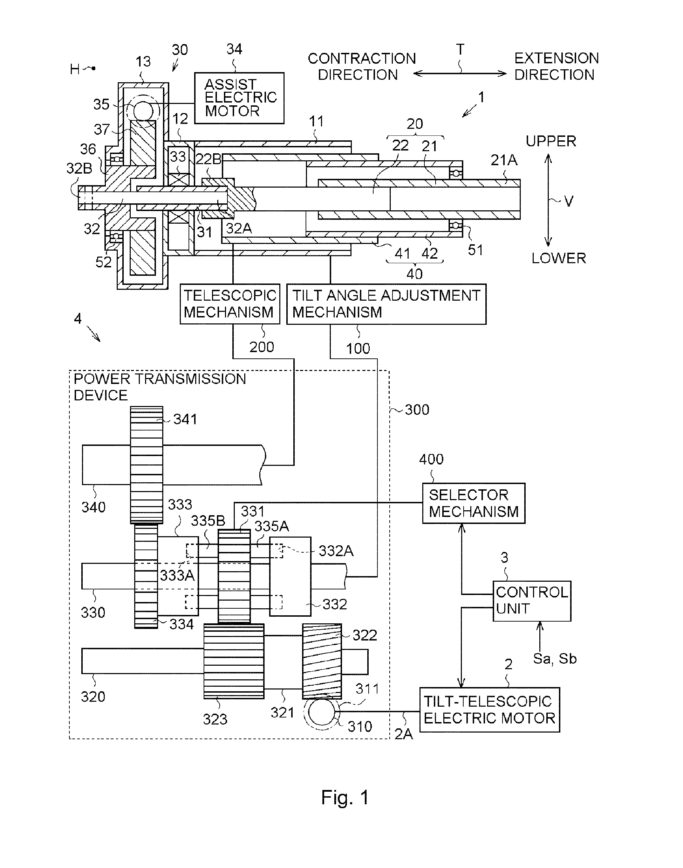

The configuration of a steering apparatus 1 will be described with reference to FIG. 1. The steering apparatus 1 is a steering column of an electric power steering system that assists an operation for steering a vehicle (not shown).

The steering apparatus 1 includes a housing 11, a steering shaft 20, an assist device 30, a column tube 40, a sensor housing 12, and a worm housing 13. The column tube 40 covers the steering shaft 20. The sensor housing 12 accommodates a torque sensor 33. The worm housing 13 accommodates a worm shaft 35 and a worm wheel 37.

In addition, the steering apparatus 1 includes a tilt angle adjustment mechanism 100, a telescopic mechanism 200, a control unit 3 and a drive mechanism 4. The drive mechanism 4 includes a power transmission device 300, a selector mechanism 400, and a tilt-telescopic electric motor 2 (hereinafter, referred to as "motor 2").

The housing 11 covers the column tube 40 and the steering shaft 20. The assist device 30 applies torque to the steering shaft 20. The steering shaft 20 includes an upper shaft 21 and a lower shaft 22. A steering wheel (not shown) is connected to the upper shaft 21. The lower shaft 22 is coupled to the upper shaft 21.

The lower shaft 22 extends inside the hollow upper shaft 21. The upper shaft 21 moves relative to the lower shaft 22 together with the column tube 40 in an extension-contraction direction T indicated by an arrow T in the drawings.

The column tube 40 includes a cylindrical outer tube 41 and a cylindrical inner tube 42 that is coupled to the outer tube 41. The inner tube 42 is located radially inward of the outer tube 41. The outer tube 41 and the inner tube 42 move together with each other in the extension-contraction direction T. A rolling bearing 51 that is located between the inner tube 42 and the upper shaft 21 supports the steering shaft 20 such that the steering shaft 20 is rotatable, and connects the column tube 40 to the steering shaft 20.

The assist device 30 includes a torsion bar 32, the torque sensor 33, an assist electric motor 34, the worm shaft 35, and the worm wheel 37. The torsion bar 22 is connected to the steering shaft 20 via an input-side shaft member 31. The worm wheel 37 is connected to the torsion bar 32 via an output-side shaft member 36.

The input-side shaft member 31 is located between a lower-side end portion 22B of the lower shaft 22 and an upper-side end portion 32A of the torsion bar 32. The input-side shaft member 31 fixes the torsion bar 32 to the lower shaft 22. The input-side shaft member 31 rotates as the torsion bar 32 is twisted. The torque sensor 33 outputs an electric signal that corresponds to the rotation angle of the input-side shaft member 31. The assist electric motor 34 rotates the worm shaft 35 on the basis of the torque detected by the torque sensor 33. The worm shaft 35 is in mesh with the worm wheel 37. The worm wheel 37 rotates together with the output-side shaft member 36. The output-side shaft member 36 and the lower-side end portion 32B of the torsion bar 32 are coupled to each other.

The sensor housing 12 and the housing 11 are coupled to each other, and the worm housing 13 and the sensor housing 12 are coupled to each other. A bearing 52 is located between the worm housing 13 and the output-side shaft member 36. The bearing 52 supports the output-side shaft member 36 such that the output-side shaft member 36 is rotatable.

The tilt angle adjustment mechanism 100 adjusts the tilt angle of the steering shaft 20, thereby adjusting the position of the steering wheel in the up-down direction of the vehicle. The telescopic mechanism 200 adjusts the length of the steering shaft 20, thereby adjusting the position of the steering wheel in the longitudinal direction of the vehicle.

The motor 2 has an output shaft 2A. The motor 2 outputs driving force to the tilt angle adjustment mechanism 100 and the telescopic mechanism 200 via the output shaft 2A. The control unit 3 controls the motor 2 and the selector mechanism 400 on the basis of a user's operation of a switch (not shown) of an operating portion.

The drive mechanism 4 transmits the power output from the motor 2 to the tilt angle adjustment mechanism 100 and the telescopic mechanism 200 via the power transmission device 300, thereby driving the tilt angle adjustment mechanism 100 and the telescopic mechanism 200.

The power transmission device 300 transmits the rotation of the output shaft 2A to the tilt angle adjustment mechanism 100 and the telescopic mechanism 200. The selector mechanism 400 changes a destination to which the driving force output from the motor 2 is transmitted. Note that the selector mechanism 400 may function as a selector mechanism that changes a position of a rotating member with respect to a rotation transmission member.

The power transmission device 300 includes a first rotary shaft 310, a second rotary shaft 320, a support shaft 330, and a telescopic-side output shaft 340. A rotating member 331 is rotatably supported by the support shaft 330. The telescopic-side output shaft 340 is connected to the telescopic mechanism 200. The support shaft 330 also serves as a tilt-side output shaft that is connected to the tilt angle adjustment mechanism 100.

The first rotary shaft 310 is coupled to the output shaft 2A of the motor 2. The first rotary shaft 310 has a screw gear 311 that rotates together with the rotary shaft 310. The second rotary shaft 320 has an input-side rotating member 321. The input-side rotating member 321 has a screw gear 322 and a spur gear 323. The screw gear 322 is in mesh with the screw gear 311 of the first rotary shaft 310. The screw gear 322 and the spur gear 323 rotate together with the second rotary shaft 320. The spur gear 323 is in mesh with the rotating member 331.

The support shaft 330 includes the rotating member 331, a tilt rotation transmission member 332, and a telescopic rotation transmission member 333. The tilt rotation transmission member 332 is coupled to the tilt angle adjustment mechanism 100. The telescopic rotation transmission member 333 is coupled to the telescopic mechanism 200. The rotating member 331 also serves as a spur gear. The rotating member 331, the tilt rotation transmission member 332, and the telescopic rotation transmission member 333 are located on the same axis. The rotating member 331 may function as a rotating member that is rotated by torque of a motor. In addition, the tilt rotation transmission member 332 may function as a rotation transmission member that is coupled to a tilt mechanism. In addition, the telescopic rotation transmission member 333 may function as a rotation transmission member that is coupled to a telescopic mechanism.

The rotating member 331 has columnar tilt protrusions 335A and columnar telescopic protrusions 335B. The tilt protrusions 335A protrude toward the tilt rotation transmission member 332. The telescopic protrusions 335B protrude toward the telescopic rotation transmission member 333. The tilt protrusions 335A and the telescopic protrusions 335B are arranged parallel to the rotation axis of the rotating member 331. The tilt protrusions 335A may function as protruded portions and first protruded portions. The telescopic protrusions 335B may function as protruded portions and second protruded portions.

The tilt rotation transmission member 332 has tilt pin holes 332A that engage with the respective tilt protrusions 335A. The tilt pin holes 332A face the tilt protrusions 335A, and are arranged parallel to the rotation axis of the rotating member 331. The tilt rotation transmission member 332 fixed to the support shaft 330 rotates together with the support shaft 330. On the other hand, the rotating member 331 and the telescopic rotation transmission member 333 are rotatable relative to the support shaft 330. The tilt pin holes 332A may function as recessed portions and first recessed portions.

The telescopic rotation transmission member 333 has a spur gear 334 and telescopic pin holes 333A. The spur gear 334 rotates together with the rotation transmission member 333. The telescopic pin holes 333A engage with the respective telescopic protrusions 335B. The telescopic pin holes 333A face the telescopic protrusions 335B, and are arranged parallel to the rotation axis of the rotating member 331. The telescopic pin holes 333A may function as recessed portions and second recessed portions.

The telescopic-side output shaft 340 has a spur gear 341 that rotates together with the output shaft 340. The spur gear 341 of the telescopic-side output shaft 340 is in mesh with the spur gear 334 of the telescopic rotation transmission member 333.

The operation of the assist device 30 will be described with reference to FIG. 1. The assist electric motor 34 is driven on the basis of the torque detected by the torque sensor 33. As the assist electric motor 34 rotates the worm shaft 35, the worm wheel 37 rotates. Thus, the assist electric motor 34 applies assist force for assisting an operation for steering the vehicle, to the steering shaft 20 via the torsion bar 32. In this way, the assist device 30 assists an operation of the steering wheel for steering the vehicle.

The operation of the tilt angle adjustment mechanism 100 that adjusts the position of the steering wheel in the up-down direction of the vehicle will be described. The motor 2 applies driving force to the tilt angle adjustment mechanism 100 via the power transmission device 300. The tilt angle adjustment mechanism 100 causes the steering apparatus 1 to pivot about a central axis that coincides with a predetermined horizontal axis H by moving the housing 11 upward or downward. The horizontal axis H is an axis perpendicular to the extension-contraction direction T and the up-down direction V of the vehicle. In this way, the tilt angle adjustment mechanism 100 adjusts the position of the steering wheel in the up-down direction V by causing the steering shaft 20 to pivot upward or downward about the central axis that coincides with the horizontal axis H.

The operation of the telescopic mechanism 200 that adjusts the position of the steering wheel in the longitudinal direction of the vehicle will be described. The motor 2 applies driving force to the telescopic mechanism 200 via the power transmission device 300. The telescopic mechanism 200 moves the upper-side end portion 21A of the upper shaft 21 in the extension-contraction direction T relative to the lower shaft 22 by moving the column tube 40 in a contraction direction or an extension direction. In this way, the telescopic mechanism 200 adjusts the position of the steering wheel in the longitudinal direction that coincides with the extension-contraction direction T, by changing the length of the steering shaft 20 in the extension-contraction direction T.

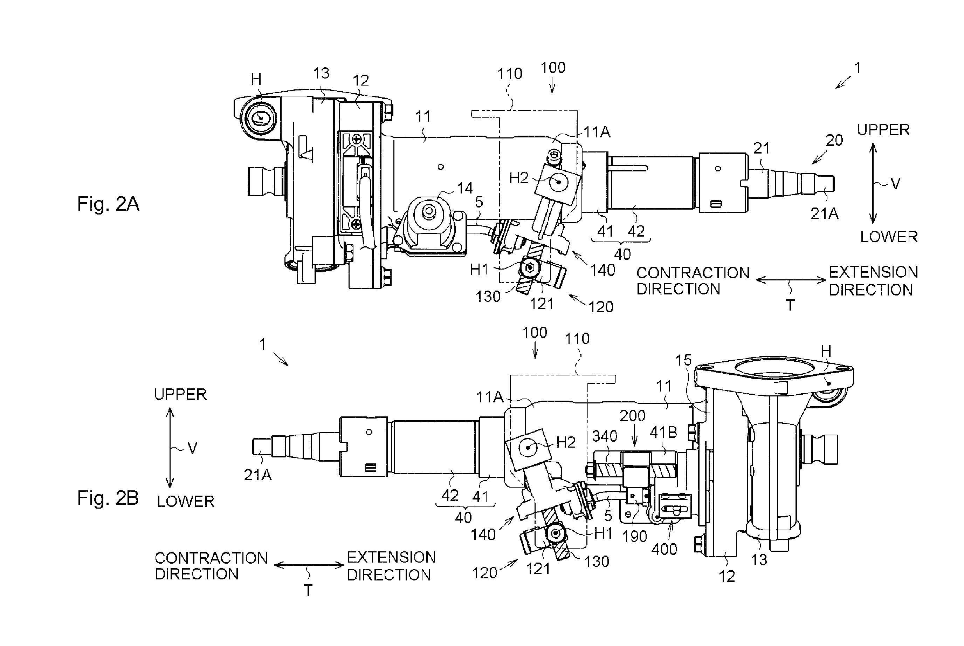

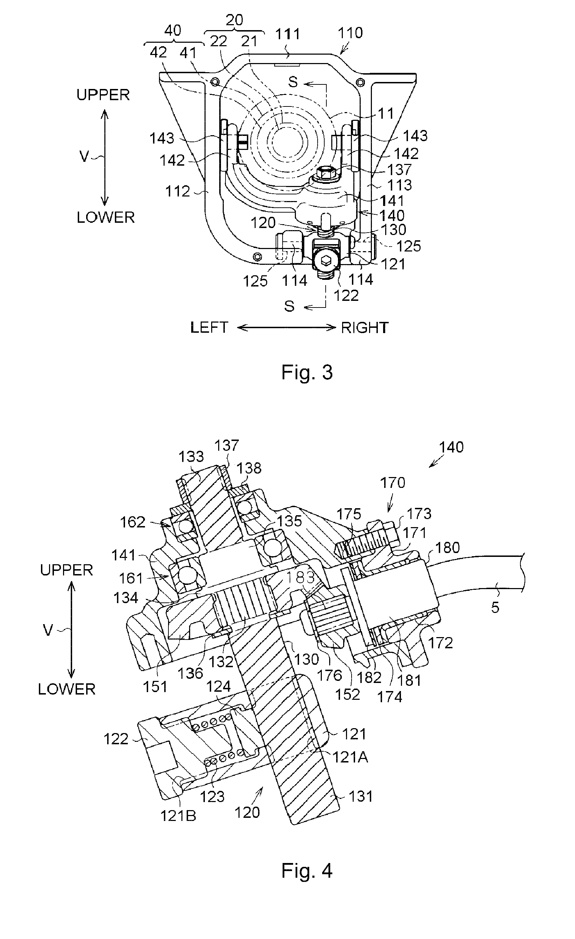

The configuration of the tilt angle adjustment mechanism 100 will be described with reference to FIG. 2A, FIG. 2B, FIG. 3 and FIG. 4. FIG. 3 shows a configuration of the steering apparatus 1 shown in FIG. 2A, as viewed from the extension direction. FIG. 4 is a sectional view taken along the line S-S in FIG. 3, including part of the tilt angle adjustment mechanism 100.

As shown in FIG. 2A and FIG. 2B, the tilt angle adjustment mechanism 100 is located at an upper-side end portion 11A of the housing 11. The tilt angle adjustment mechanism 100 includes a column bracket 110, a tilt nut device 120, a tilt screw 130, a housing support device 140, and a flexible shaft 5. The column bracket 110 covers the housing 11. The tilt screw 130 moves relative to the tilt nut device 120. The housing support device 140 supports the housing 11. The column bracket 110 supports the tilt nut device 120. The tilt nut device 120 and the housing support device 140 support the tilt screw 130 such that the tilt screw 130 is rotatable.

As shown in FIG. 3, the column bracket 110 includes a vehicle body fitted portion 111, guide portions 112, 113, and tilt nut fitted portions 114. The vehicle body fitted portion 111 is fitted to a vehicle body (not shown). The guide portions 112, 113 extend downward from the vehicle body fitted portion 111. A tilt nut 121 is fitted to the tilt nut fitted portions 114. The guide portions 112, 113 are located on respective sides of the housing support device 140 in the lateral direction that is parallel to the horizontal axis H, and guide movement of the housing support device 140 in the up-down direction V. The tilt nut fitted portions 114 are located at the lower end portions of the guide portions 112, 113.

As shown in FIG. 4, the tilt nut device 120 includes the tilt nut 121, a plug 122, a coil spring 123 and a pressing member 124. As shown in FIG. 3, the tilt nut device 120 includes shaft members 125.

The tilt nut 121 is located below the housing support device 140. The tilt nut 121 has an internal thread 121A that is screwed to an external thread 131 of the tilt screw 130. The tilt nut 121 accommodates the coil spring 123 and the pressing member 124. The coil spring 123 is located between the plug 122 that is fixed to the tilt nut 121 and the pressing member 124 that is movable in the tilt nut 121. The coil spring 123 applies force for pressing the tilt screw 130 against the internal thread 121A, to the pressing member 124. The pressing member 124 suppresses generation of noise due to a backlash between the external thread 131 of the tilt screw 130 and the internal thread 121A of the tilt nut 121 by pressing the tilt screw 130 against the internal thread 121A of the tilt nut 121. The plug 122 is screwed to an internal thread 121B of the tilt nut 121. As the amount of screw-in of the plug 122 with respect to the internal thread 121B changes, a clearance between the plug 122 and the pressing member 124 changes. Therefore, the plug 122 changes force for pressing the tilt screw 130 against the internal thread 121A.

As shown in FIG. 3, the shaft members 125 extending in the lateral direction each extend inside the tilt nut 121 and the tilt nut fitted portions 114 of the column bracket 110. At least one of the tilt nut 121 and a pair of the tilt nut fitted portions 114 is pivotable with respect to the shaft members 125. Thus, the tilt nut device 120 pivots with respect to the column bracket 110 about a central axis that coincides with a horizontal axis H1 shown in FIG. 2A and FIG. 2B. The horizontal axis H1 extends in a direction parallel to the horizontal axis H.

As shown in FIG. 4, the tilt screw 130 has a tilt angle adjustment external thread 131, a gear fitted portion 132, a fixing external thread 133, a flange portion 134 and a bearing fitted portion 135, which are formed integrally with each other. A bevel gear 151 is fitted to the gear fitted portion 132. A bearing 161 is fitted to the bearing fitted portion 135.

The external thread 131 that is located in the lower end portion of the tilt screw 130 is screwed to the internal thread 121A of the tilt nut 121. The gear fitted portion 132, which is located above the external thread 131, and the inner periphery of the bevel gear 151 are in mesh with each other by splines. Thus, the tilt screw 130 and the bevel gear 151 rotate together with each other. The external thread 133 that is located in the upper end portion of the tilt screw 130 is fitted to a nut 137. The flange portion 134 that is located above the gear fitted portion 132 restricts movement of the bevel gear 151 in the axial direction of the tilt screw 130, in cooperation with a circlip 136 that is located below the gear fitted portion 132.

As shown in FIG. 3, the housing support device 140 includes a housing 141 and shaft members 143. The housing 141 has brackets 142. The shaft members 143 that extend in the lateral direction each extend inside the corresponding bracket 142 and the upper-side end portion 11A of the housing 11. At least one of a pair of the brackets 142 and the upper-side end portion 11A is pivotable with respect to the shaft members 143. Thus, the housing support device 140 pivots with respect to the housing 11 about a central axis that coincides with a horizontal axis H2 shown in FIG. 2A and FIG. 2B. The horizontal axis H2 extends in a direction parallel to the horizontal axes H, H1.

As shown in FIG. 4, the housing support device 140, which supports the tilt screw 130 in cooperation with the tilt nut device 120 such that the tilt screw 130 is rotatable, includes the bearing 161, a bearing 162, and a flexible shaft support mechanism 170. The bearings 161, 162 support the tilt screw 130. The flexible shaft support mechanism 170 supports the flexible shaft 5 that is coupled to the support shaft 330.

The bearing 161 supports the columnar bearing fitted portion 135 that is located above the flange portion 134. The bearing 161 bears a radial load of the tilt screw 130. The bearing 162 that is located above the bearing 161 is located below the nut 137. The bearing 162 supports an annular member 138 that is located between the bearing 162 and the nut 137 in the axial direction of the tilt screw 130. The annular member 138 functions as a washer. The bearing 162 bears an axial load of the tilt screw 130 by supporting the annular member 138.

The flexible shaft support mechanism 170 includes a rotary body 180, a rotary body support cover 171, a bearing 172, a bolt 173, annular members 174, 175 and a circlip 176. The rotary body 180 is fixed to an output-side end portion of the flexible shaft 5. The rotary body support cover 171 supports the rotary body 180 such that the rotary body 180 is rotatable.

The rotary body 180 has a columnar bearing fitted portion 181, a flange portion 182 and a gear fitted portion 183, which are formed integrally with each other. The bearing 172 is fitted to the bearing fitted portion 181. The flange portion 182 is located near the bearing fitted portion 181. A bevel gear 152 is fitted to the gear fitted portion 183.

The rotary body support cover 171 supports the rotary body 180 via the bearing 172. The bearing 172 located inside the rotary body support cover 171 supports the columnar bearing fitted portion 181. The bolt 173 fixes the rotary body support cover 171 to the housing 141. The annular members 174, 175 are located between the bearing 172 and the flange portion 182 in the axial direction of the rotary body 180. The annular member 175 has elasticity that acts in the axial direction of the rotary body 180. The bearing 172 that bears a radial load of the rotary body 180 also bears an axial load of the rotary body 180 by supporting the flange portion 182 via the annular members 174, 175. The gear fitted portion 183 of the rotary body 180 and the inner periphery of the bevel gear 152 are in mesh with each other by splines. Thus, the rotary body 180 and the bevel gear 152 rotate together with each other. The circlip 176 and the flange portion 182 of the rotary body 180 restrict movement of the bevel gear 152 in the axial direction of the rotary body 180.

The flexible shaft 5 is a metal wire that rotates while allowing its deflection. As shown in FIG. 2B, an input-side end portion of the flexible shaft 5 rotates together with a rotary body 190 that is coupled to the support shaft 330 (see FIG. 1). Thus, as the support shaft 330 rotates, the rotary body 190 and the flexible shaft 5 rotate.

Next, the operation of the tilt angle adjustment mechanism 100 will be described. As the support shaft 330 (see FIG. 1) of the power transmission device 300 rotates, the flexible shaft 5 (see FIG. 4) rotates. The rotary body 180 rotates in accordance with the rotation of the flexible shaft 5. The bevel gears 152, 151 transmit the rotation of the rotary body 180 to the tilt screw 130. As the tilt screw 130 rotates relative to the tilt nut 121, the tilt nut 121 moves upward or downward. That is, the distance from the tilt nut device 120 to the housing support device 140 changes in the axial direction of the tilt screw 130. As the clearance between the tilt nut device 120 and the housing support device 140 changes in this way, the housing 11 and the steering shaft 20 pivots upward or downward inside the column bracket 110 about the pivot axis that coincides with the horizontal axis H (see FIG. 2).

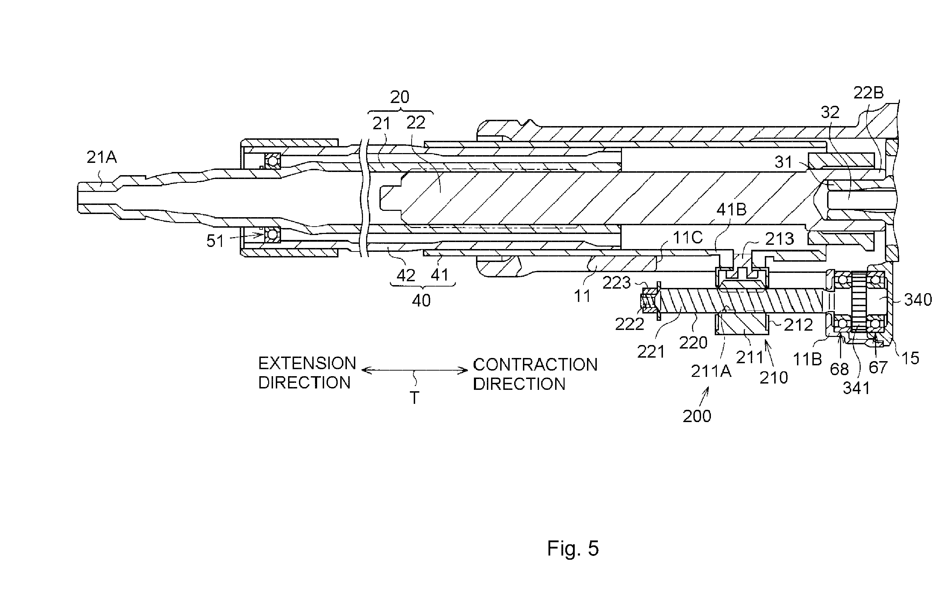

The configuration of the telescopic mechanism 200 will be described with reference to FIG. 5. FIG. 5 shows a section that is parallel to the extension-contraction direction T, and that includes part of the telescopic mechanism 200. As shown in FIG. 5, the telescopic mechanism 200 is located at a lower-side end portion 41B of the outer tube 41. The telescopic mechanism 200 includes a telescopic nut device 210 and a telescopic screw 220. The telescopic nut device 210 is fixed to the outer periphery of the column tube 40. The telescopic screw 220 moves relative to the telescopic nut device 210. The housing 11 has an opening 11C so that the telescopic nut device 210 that is located on the outer periphery of the column tube 40 does not contact the housing 11. That is, the telescopic nut device 210 protrudes from the opening 11C of the housing 11 toward the outside of the housing 11.

The telescopic nut device 210 includes a telescopic nut 211, a nut accommodating case 212, and a case fixing bolt 213. The telescopic nut 211 has an internal thread 211A. The nut accommodating case 212 accommodates the telescopic nut 211. The case fixing bolt 213 fixes the nut accommodating case 212 to the column tube 40. The case fixing bolt 213 passes through the nut accommodating case 212, and is fitted to the lower-side end portion 41B of the outer tube 41.

The telescopic screw 220 passes through the telescopic nut 211 and the nut accommodating case 212. The telescopic screw 220 has an external thread 221 and an external thread 222 that are formed integrally with the telescopic screw 220. The external thread 221 is screwed to the internal thread 211A of the telescopic nut 211. The external thread 222 is located at a distal end portion in the extension direction. A nut 223 is screwed to the external thread 222. The nut 223 restricts movement of the telescopic nut device 210 relative to the telescopic screw 220 in the extension direction.

Next, the operation of the telescopic mechanism 200 will be described. As the telescopic-side output shaft 340 (see FIG. 1) of the power transmission device 300 rotates, the telescopic screw 220 (see FIG. 5) rotates. As the telescopic screw 220 rotates relative to the telescopic nut 211, the telescopic nut 211 moves in the extension direction or the contraction direction. That is, the outer tube 41 to which the telescopic nut device 210 is fixed moves in the extension-contraction direction T together with the inner tube 42. As the column tube 40 that is connected to the upper shaft 21 moves in this way, the upper shaft 21 moves relative to the lower shaft 22 in the extension-contraction direction T.

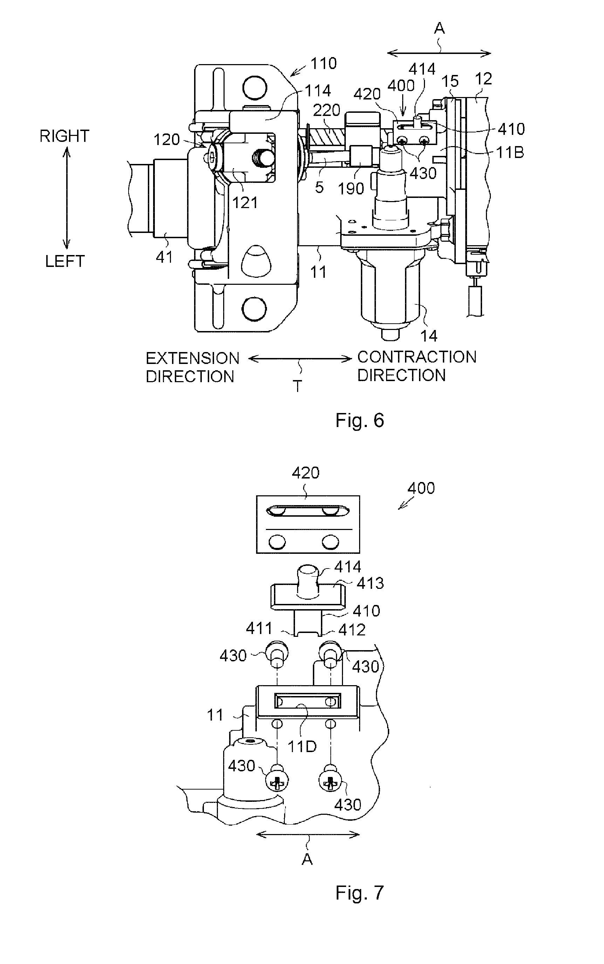

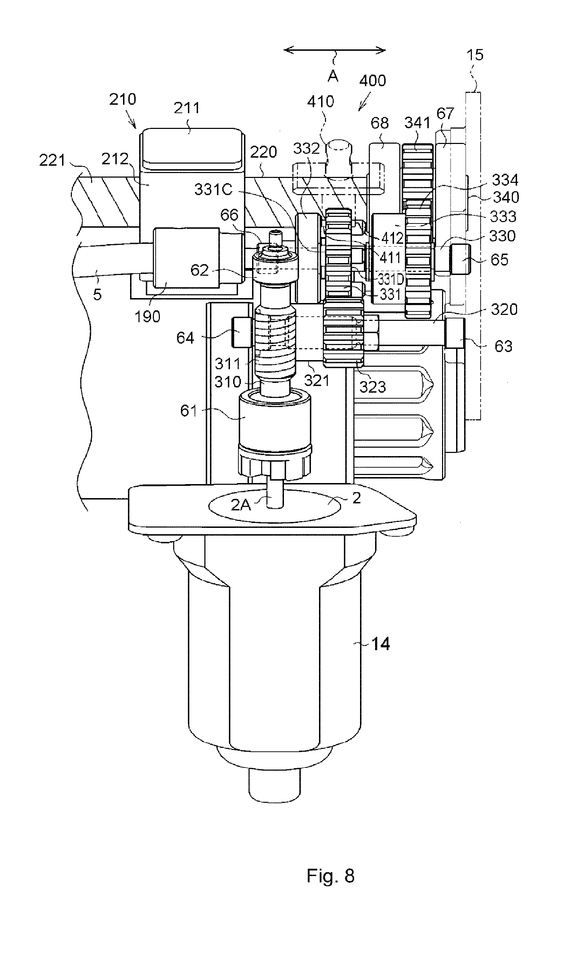

The configuration of the selector mechanism 400 will be described with reference to FIG. 6 to FIG. 8. FIG. 7 is an exploded view of the selector mechanism 400 shown in FIG. 6. FIG. 8 shows a state where the housing 11, and the like, shown in FIG. 6 are removed. The arrow A in the drawings indicates the axial direction of the rotating member 331. The axial direction A is a direction parallel to the rotation axis of the rotating member 331.

As shown in FIG. 6, the selector mechanism 400 is located at the lower-side end portion 11B of the housing 11. As shown in FIG. 7, the selector mechanism 400 includes a slider 410 and an electric motor (selector motor, not shown). The slider 410 moves the rotating member 331 of the power transmission device 300 in the axial direction A. The electric motor moves the slider 410. A compact motor that outputs power smaller than that of the motor 2 is employed as the electric motor that moves the slider 410.

The slider 410 has internal protrusions 411, 412, a support portion 413 and an external protrusion 414. The internal protrusions 411, 412 protrude into the housing 11. The support portion 413 is supported by the housing 11 and a slider cover 420. The external protrusion 414 protrudes from the slider cover 420. The external protrusion 414 protrudes outside the housing 11 from an opening 11D of the housing 11. The slider 410 is movable in the opening 11D. The outer surface of the housing 11 and the slider cover 420 hold the support portion 413 of the slider 410 so that the slider 410 does not to fall off through the opening 11D of the housing 11. Screws 430 that are screwed to the housing 11 fix the slider cover 420 to the housing 11.

As shown in FIG. 8, the internal protrusions 411, 412 are spaced apart from each other at a clearance that is equal to or larger than the size of the rotating member 331 in the axial direction A. By moving the slider 410 in the axial direction A, the internal protrusion 411 presses a side face 331C of the rotating member 331, which faces the tilt rotation transmission member 332, toward the telescopic rotation transmission member 333. The internal protrusion 412 presses a side face 331D of the rotating member 331, which faces the telescopic rotation transmission member 333, toward the tilt rotation transmission member 332. In this way, the selector mechanism 400 changes the position of the rotating member 331 relative to the tilt rotation transmission member 332 and the telescopic rotation transmission member 333 by moving the rotating member 331 provided between the tilt rotation transmission member 332 and the telescopic rotation transmission member 333 in the axial direction A.

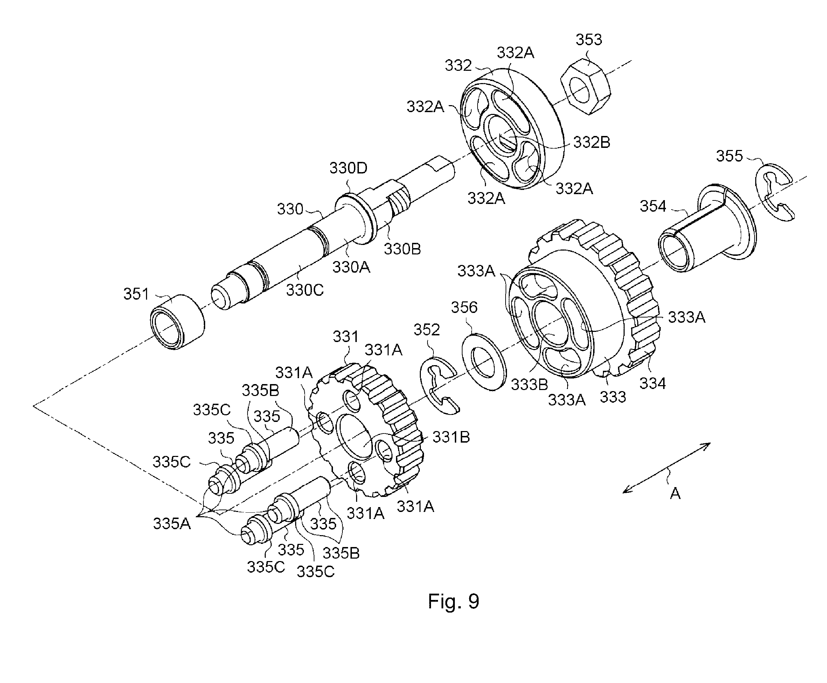

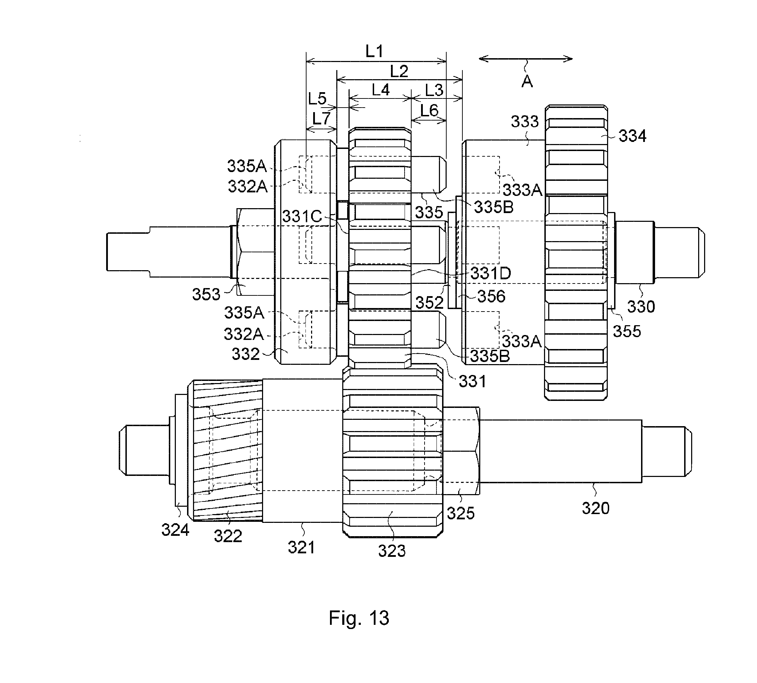

The structure of the power transmission device 300 will be described in detail with reference to FIG. 8 to FIG. 13. FIG. 9 shows a state where the members supported by the support shaft 330 are removed from the support shaft 330. FIG. 13 shows a state where the input-side rotating member 321 of the second rotary shaft 320 is in mesh with the rotating member 331.

As shown in FIG. 8, the first rotary shaft 310 and the second rotary shaft 320 are arranged in a skew position. The second rotary shaft 320, the support shaft 330 and the telescopic-side output shaft 340 are parallel to each other. The first rotary shaft 310 to which the output shaft 2A of the motor 2 is connected is provided with bearings 61, 62. The screw gear 311 is located between the bearings 61, 62. The second rotary shaft 320 is provided with bearings 63, 64. The input-side rotating member 321 is located between the bearings 63, 64. The support shaft 330 is provided with bearings 65, 66. The rotating member 331, the tilt rotation transmission member 332 and the telescopic rotation transmission member 333 are located between the bearings 65, 66. The telescopic-side output shaft 340 is provided with bearings 67, 68. The spur gear 341 is located between the bearings 67, 68.

The housing 11 (see FIG. 6) accommodates the power transmission device 300 that includes the bearings 61, 62, 64, 66, 68. A motor housing 14 coupled to the housing 11 accommodates the motor 2 that is coupled to the power transmission device 300. A bearing housing 15 coupled to the housing 11 accommodates the bearings 63, 65, 67.

As shown in FIG. 9, the support shaft 330 has an intermediate member fitted portion 330A, a tilt member fitted portion 330B, a telescopic member fitted portion 330C, and a flange portion 330D, which are formed integrally with each other. The rotating member 331 is fitted to the intermediate member fitted portion 330A. The tilt rotation transmission member 332 is fitted to the tilt member fitted portion 330B. The telescopic rotation transmission member 333 is fitted to the telescopic member fitted portion 330C.

Bushes 351, 354, snap rings 352, 355, a nut 353, and a spacer 356 are provided with the support shaft 330 as components that are connected to the support shaft 330. The cylindrical bush 351 is fitted to the intermediate member fitted portion 330A of the support shaft 330. The snap ring 352 is located between the intermediate member fitted portion 330A and the telescopic member fitted portion 330C. The snap ring 352 restricts movement of the rotating member 331 in the axial direction A together with the flange portion 330D. The nut 353 is fitted to the tilt member fitted portion 330B. The nut 353 restricts movement of the tilt rotation transmission member 332 in the axial direction A together with the flange portion 330D. The cylindrical bush 354 is fitted to the telescopic member fitted portion 330C of the support shaft 330. Part of the bush 354 also serves as a spacer between the telescopic rotation transmission member 333 and the snap ring 355. The snap ring 355 restricts movement of the telescopic rotation transmission member 333 in the axial direction A together with the snap ring 352. The spacer 356 is located between the telescopic rotation transmission member 333 and the snap ring 352. The spacer 356 and the bush 354 prevent the telescopic rotation transmission member 333 from contacting the snap rings 352, 355.

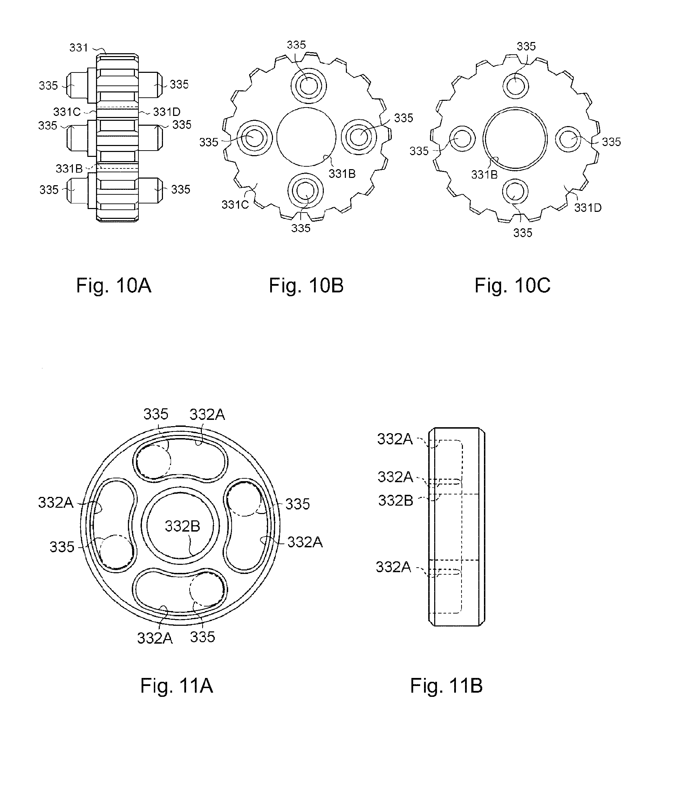

FIG. 10A shows a side view of the rotating member 331 as viewed from a direction perpendicular to the axial direction. FIG. 10B is a front view that shows a face of the rotating member 331, which faces the tilt rotation transmission member. FIG. 10C is a back view that shows a face of the rotating member 331, which faces the telescopic rotation transmission member.

The rotating member 331 is fitted to the intermediate member fitted portion 330A. The rotating member 331 has press-fitting holes 331A and an insertion hole 331B. Four pins 335 are respectively press-fitted into the press-fitting holes 331A. The insertion hole 331B is larger in size than the outside diameter of the bush 351. The intermediate member fitted portion 330A of the support shaft 330 is fitted into the insertion hole 331B via the bush 351. The bush 351 is located between the intermediate member fitted portion 330A and the inner periphery of the rotating member 331, which defines the insertion hole 331B. The bush 351 functions as a bearing for the rotating member 331.

FIG. 11A is a front view of the tilt rotation transmission member 332. FIG. 11B shows a side view of the tilt rotation transmission member 332. The tilt rotation transmission member 332 is fitted to the tilt member fitted portion 330B. The tilt rotation transmission member 332 has the tilt pin holes 332A and an insertion hole 332B. The insertion hole 332B engages with the tilt member fitted portion 330B. Each tilt pin hole 332A has a shape along a circle having a center that coincides with the axis that extends in the axial direction A. The tilt member fitted portion 330B of the support shaft 330 is fitted to the insertion hole 332B. Because the insertion hole 332B and the tilt member fitted portion 330B are engaged with each other, the tilt rotation transmission member 332 does not rotate relative to the support shaft 330.

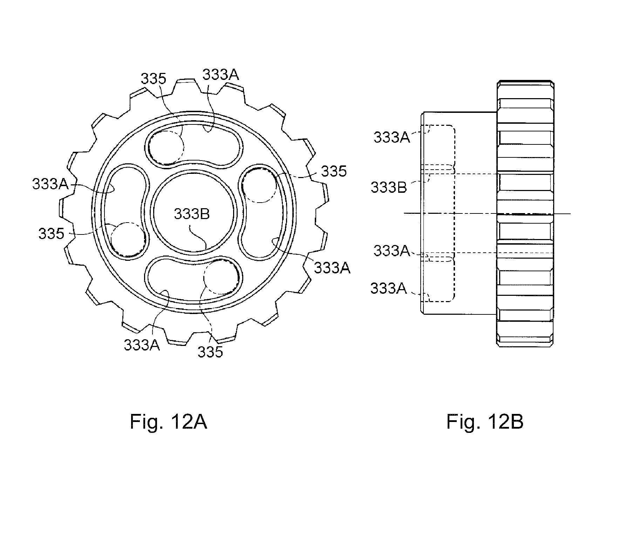

FIG. 12A shows a front view of the telescopic rotation transmission member 333. FIG. 12B shows a side view of the telescopic rotation transmission member 333. The telescopic rotation transmission member 333 is fitted to the telescopic member fitted portion 330C. The telescopic rotation transmission member 333 has the telescopic pin holes 333A and an insertion hole 333B that is larger in size than the outside diameter of the bush 354. Each telescopic pin hole 333A has a shape along a circle having a center that coincides with the axis that extends in the axial direction A. The telescopic member fitted portion 330C of the support shaft 330 is fitted to the insertion hole 333B via the bush 354. The bush 354 is located between the telescopic member fitted portion 330C and the inner periphery of the telescopic rotation transmission member 333, which defines the insertion hole 333B. The bush 354 functions as a bearing for the telescopic rotation transmission member 333.

The pins 335 are fitted into the respective press-fitting holes 331A of the rotating member 331. Each pin 335 is a protrusion that has the tilt protrusion 335A and the telescopic protrusion 335B that are formed as a single-piece member and made of the same material. That is, the tilt protrusion 335A and the telescopic protrusion 335B are formed by the corresponding pin 335. At the time of press-fitting each pin 335 into the press-fitting hole 331A, each pin 335 has a flange portion 335C in order to restrict movement of the pin 335 relative to the rotating member 331 in the axial direction A.

As shown in FIG. 13, the support shaft 330 supports the rotating member 331, which is in mesh with the spur gear 323, such that the rotating member 331 is movable in the axial direction A. A flange portion 324 of the second rotary shaft 320 and a nut 325 fitted to the second rotary shaft 320 sandwich the input-side rotating member 321 fitted to the second rotary shaft 320. In this way, the input-side rotating member 321 is fixed to the second rotary shaft 320.

A size L1 of each pin 335 in the axial direction A, that is, a distance from the distal end of each tilt protrusion 335A to the distal end of the corresponding telescopic protrusion 335B, is larger than a length L2 of a clearance between the tilt rotation transmission member 332 and the telescopic rotation transmission member 333, which face each other in the axial direction A. Thus, in the power transmission device 300, it is possible to achieve a state where the tilt protrusions 335A are inserted into the respective tilt pin holes 332A and the telescopic protrusions 335B are inserted into the respective telescopic pin holes 333A.

A length L7 of each tilt protrusion 335A in the axial direction A, which is inserted into the corresponding tilt pin hole 332A, is smaller than a movable length L3 over which the rotating member 331 is movable in the axial direction A between the tilt rotation transmission member 332 and the telescopic rotation transmission member 333. Thus, in the power transmission device 300, it is possible to achieve a state where the tilt protrusions 335A are not inserted into the tilt pin holes 332A. The movable length L3 over which the rotating member 331 is movable in the axial direction A corresponds to a length that is obtained by subtracting a size L4 of the rotating member 331 in the axial direction A and a length L5 of each flange portion 335C in the axial direction A, which is not inserted in the pin holes 332A, 333A, from the length L2 of the clearance between the tilt rotation transmission member 332 and the telescopic rotation transmission member 333.

A length L6 of each telescopic protrusion 335B in the axial direction A, which is inserted into the corresponding telescopic pin hole 333A, is also smaller than the movable length L3 over which the rotating member 331 is movable in the axial direction between the tilt rotation transmission member 332 and the telescopic rotation transmission member 333. Thus, in the power transmission device 300, it is possible to achieve a state where the telescopic protrusions 335B are not inserted into the telescopic pin holes 333A.

When the rotating member 331 rotates in a state where the tilt protrusions 335A are inserted into the tilt pin holes 332A, the rotating member 331 and the tilt rotation transmission member 332 are coupled to each other. Similarly, when the rotating member 331 rotates in a state where the telescopic protrusions 335B are inserted into the telescopic pin holes 333A, the rotating member 331 and the telescopic rotation transmission member 333 are coupled to each other.

The slider 410 of the selector mechanism 400 shown in FIG. 8 moves the rotating member 331 to one of a first coupling position, a second coupling position and a double coupling position described below.
(1) The first coupling position is a position at which the rotating member 331 is coupled to only the tilt rotation transmission member 332 from among the tilt rotation transmission member 332 and the telescopic rotation transmission member 333. That is, the first coupling position corresponds to a coupling position at which the rotating member 331 is coupled to the tilt rotation transmission member 332 and a non-coupling position at which the rotating member 331 is separated from the telescopic rotation transmission member 333.
(2) The second coupling position is a position at which the rotating member 331 is coupled to only the telescopic rotation transmission member 333 from among the tilt rotation transmission member 332 and the telescopic rotation transmission member 333. That is, the second coupling position corresponds to a coupling position at which the rotating member 331 is coupled to the telescopic rotation transmission member 333 and a non-coupling position at which the rotating member 331 is separated from the tilt rotation transmission member 332.
(3) The double coupling position is a position at which the rotating member 331 is coupled to both the tilt rotation transmission member 332 and the telescopic rotation transmission member 333.

That is, the selector mechanism 400 changes the coupling state among the following tilt coupling state, telescopic coupling state and double coupling state by moving the rotating member 331.
(1) The tilt coupling state is a state where the rotating member 331 is located at the first coupling position, and therefore the rotating member 331 and the tilt rotation transmission member 332 are coupled to each other and the rotating member 331 and the telescopic rotation transmission member 333 are not coupled to each other.
(2) The telescopic coupling state is a state where the rotating member 331 is located at the second coupling position, and therefore the rotating member 331 and the telescopic rotation transmission member 333 are coupled to each other and the rotating member 331 and the tilt rotation transmission member 332 are not coupled to each other.
(3) The double coupling state is a state where the rotating member 331 is located at the double coupling position, and therefore the rotating member 331 and both the tilt rotation transmission member 332 and the telescopic rotation transmission member 333 are coupled to each other.

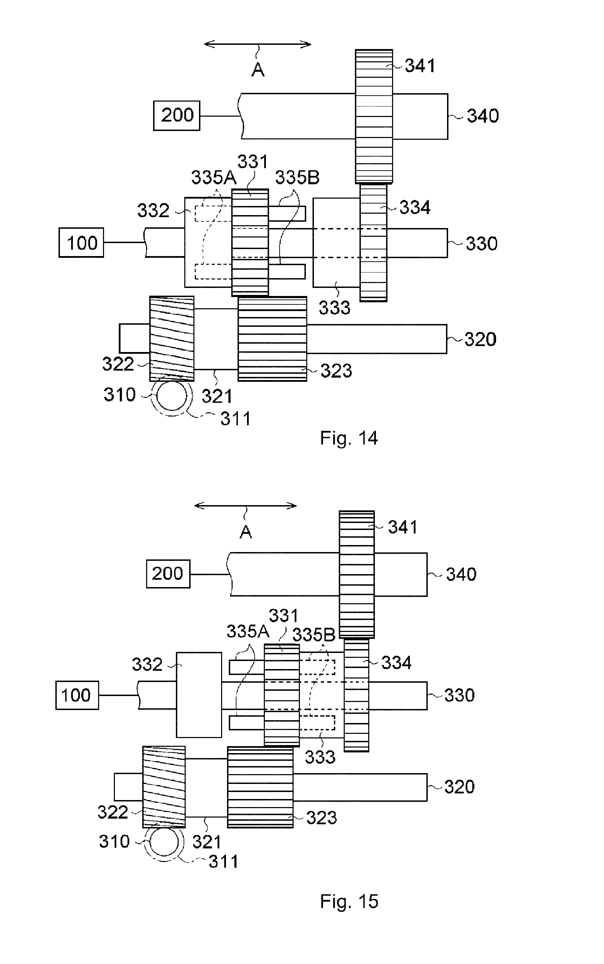

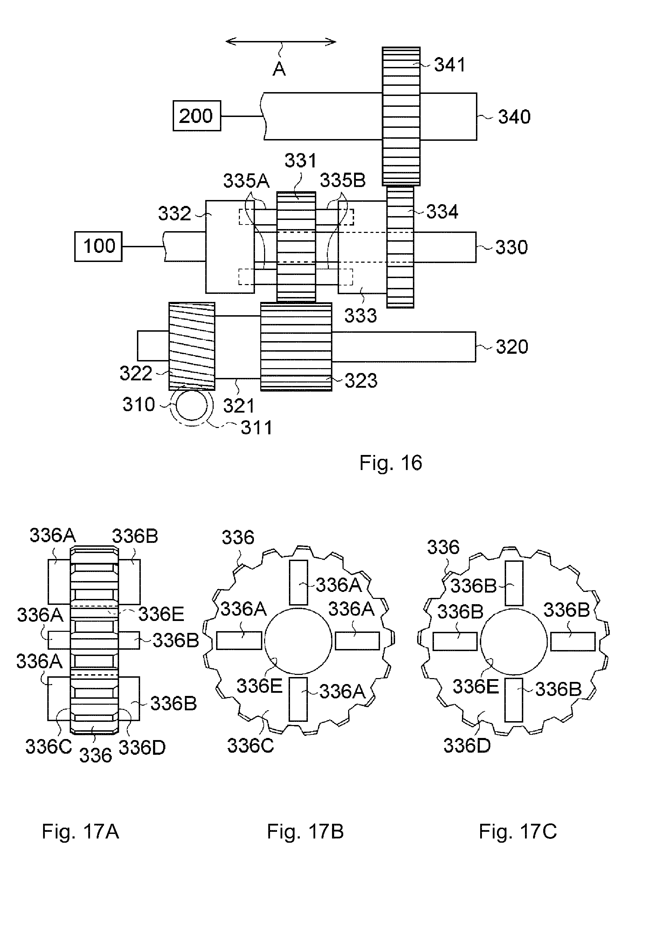

A transmission path of the driving force output from the motor 2 will be described with reference to FIG. 14 to FIG. 16. FIG. 14 shows the tilt coupling state where the motor 2 (see FIG. 8) drives the tilt angle adjustment mechanism 100. FIG. 15 shows the telescopic coupling state where the motor 2 drives the telescopic mechanism 200. FIG. 16 shows the double coupling state where the motor 2 drives the tilt angle adjustment mechanism and the telescopic mechanism at the same time.

As shown in FIG. 14, in the tilt coupling state, the rotating member 331 and the tilt rotation transmission member 332 are coupled to each other. Therefore, the rotation of the output shaft 2A of the motor 2 is transmitted to the flexible shaft 5 (see FIG. 8) of the tilt angle adjustment mechanism 100 via the first rotary shaft 310, the second rotary shaft 320, the rotating member 331, the tilt rotation transmission member 332 and the support shaft 330.

As shown in FIG. 15, in the telescopic coupling state, the rotating member 331 and the telescopic rotation transmission member 333 are coupled to each other. Therefore, the rotation of the output shaft 2A of the motor 2 is transmitted to the telescopic screw 220 (see FIG. 8) of the telescopic mechanism 200 via the first rotary shaft 310, the second rotary shaft 320, the rotating member 331, the telescopic rotation transmission member 333 and the telescopic-side output shaft 340.

As shown in FIG. 16, in the double coupling state, the rotation of the output shaft 2A of the motor 2 is transmitted to the first rotary shaft 310, the second rotary shaft 320 and the rotating member 331. Then, the rotation is transmitted from the rotating member 331 to the flexible shaft 5 via the tilt rotation transmission member 332 and the support shaft 330, and is transmitted from the rotating member 331 to the telescopic screw 220 via the telescopic rotation transmission member 333 and the telescopic-side output shaft 340.

When the output shaft 2A of the motor 2 rotates in one direction in the double coupling state, the tilt angle adjustment mechanism 100 pivots the steering shaft 20 upward about a central axis that coincides with the horizontal axis H, and the telescopic mechanism 200 reduces the length of the steering shaft 20. When the output shaft 2A of the motor 2 rotates in the other direction, the tilt angle adjustment mechanism 100 pivots the steering shaft 20 downward about the central axis that coincides with the horizontal axis H, and the telescopic mechanism 200 extends the length of the steering shaft 20.

Next, the operation of the selector mechanism 400 will be described. The selector mechanism 400 changes a destination to which the power output from the motor 2 is transmitted, by moving the rotating member 331 in the axial direction A. That is, the selector mechanism 400 inserts the tilt protrusions 335A into the tilt pin holes 332A by bringing the rotating member 331 close to the tilt rotation transmission member 332, thus coupling the rotating member 331 and the tilt rotation transmission member 332 to each other. At this time, the power transmission device 300 transmits the power output from the motor 2 to the tilt angle adjustment mechanism 100.

The selector mechanism 400 inserts the telescopic protrusions 335B into the telescopic pin holes 333A by bringing the rotating member 331 close to the telescopic rotation transmission member 333, thus coupling the rotating member 331 and the telescopic rotation transmission member 333 to each other. At this time, the power transmission device 300 transmits the power output from the motor 2 to the telescopic mechanism 200.

The selector mechanism 400 inserts the tilt protrusions 335A into the tilt pin holes 332A and inserts the telescopic protrusions 335B into the telescopic pin holes 333A, thus coupling the rotating member 331 and both the tilt rotation transmission member 332 and the telescopic rotation transmission member 333 to each other. At this time, the power transmission device 300 transmits the power output from the motor 2 to both the tilt angle adjustment mechanism 100 and the telescopic mechanism 200.

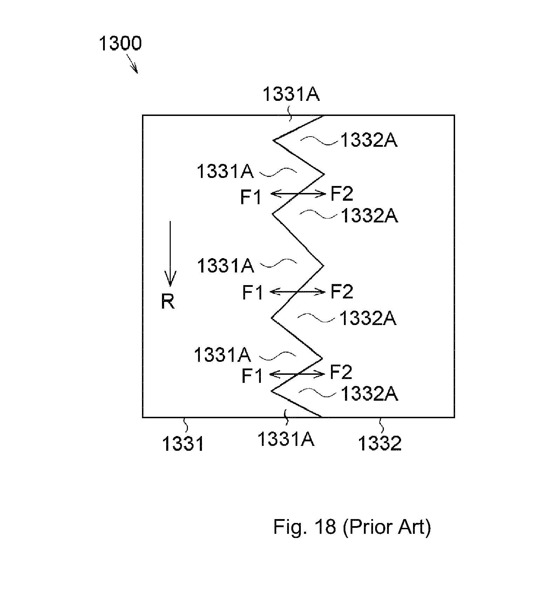

When the rotation of the rotating member 331 is transmitted to the tilt rotation transmission member 332 or the telescopic rotation transmission member 333, it is possible to reduce thrust force that acts in a direction parallel to the rotation axis as compared with a power transmission device 1300 according to a comparative example shown in FIG. 18.

The comparative example will be described with reference to FIG. 18. The power transmission device 1300 includes a rotating member 1331 and a rotation transmission member 1332. The rotation of an output shaft (not shown) of a motor is transmitted to the rotating member 1331. The rotation transmission member 1332 transmits the rotation of the rotating member 1331 to one of a tilt angle adjustment mechanism (not shown) and a telescopic mechanism (not shown). The rotating member 1331 and the rotation transmission member 1332 each are formed of a crown gear. The rotating member 1331 has triangular teeth 1331A that protrude in a direction parallel to the rotation axis of the rotating member 1331. Similarly, the rotation transmission member 1332 has triangular teeth 1332A that protrude in a direction parallel to the rotation axis of the rotating member 1331. When the teeth 1331A and 1332A mesh with each other, the rotating member 1331 and the rotation transmission member 1332 are coupled to each other. At this time, the teeth 1331A and 1332A are engaged with each other at faces that are inclined with respect to the rotation axis of the rotating member 1331. Therefore, as the rotating member 1331 rotates in a direction indicated by an arrow R, thrust force indicated by an arrow F1 in the drawing acts on the rotating member 1331, and thrust force indicated by an arrow F2 in the drawing acts on the rotation transmission member 1332. Thus, there occur thrust forces that separate the rotating member 1331 and the rotation transmission member 1332 from each other. Therefore, as the rotating member 1331 slips, the power transmission device 1300 is not able to reliably transmit the rotation of the output shaft of the motor to the tilt angle adjustment mechanism or the telescopic mechanism. In addition, when the power transmission device 1300 includes an actuator (not shown) that is used to keep a state where the rotating member 1331 and the rotation transmission member 1332 are coupled to each other in order to prevent slip of the rotating member 1331, the configuration becomes complex.

On the other hand, in the power transmission device 300 according to the present embodiment, the tilt protrusions 335A and the tilt pin holes 332A are engageable with each other at faces that are parallel to the rotation axis of the rotating member 331. Thus, the tilt protrusions 335A and the tilt pin holes 332A do not cause thrust force to act on the rotating member 331 and the rotation transmission member 332. In addition, the telescopic protrusions 335B and the telescopic pin holes 333A are engageable with each other at faces that are parallel to the rotation axis of the rotating member 331. Thus, the telescopic protrusions 335B and the telescopic pin holes 333A do not cause thrust force to act on the rotating member 331 and the telescopic rotation transmission member 333.

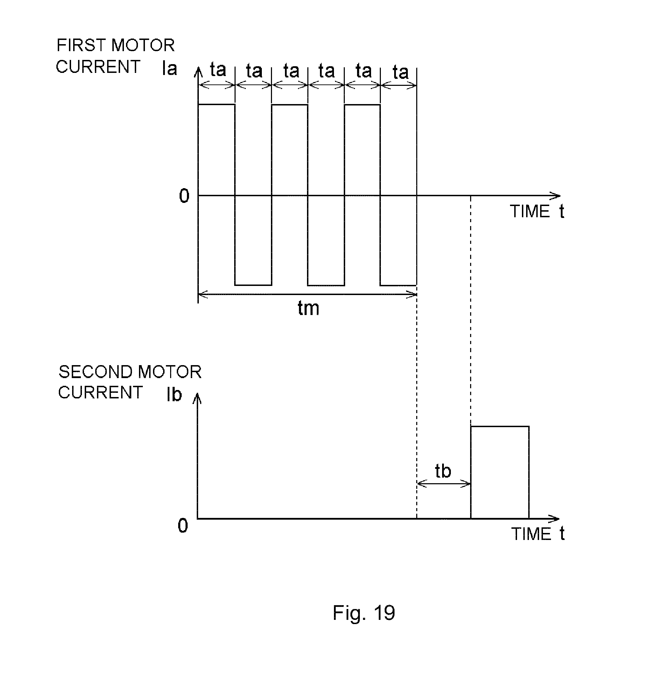

Next, the operation of the control unit 3 will be described with reference to FIG. 19. When the control unit 3 detects a telescopic operation signal Sb (see FIG. 1) at the first coupling position, the control unit 3 determines that the mechanism that is driven needs to be changed from the tilt angle adjustment mechanism 100 to the telescopic mechanism 200. When the control unit 3 detects a tilt operation signal Sa (see FIG. 1) at the second coupling position, the control unit 3 determines that the mechanism that is driven needs to be changed from the telescopic mechanism 200 to the tilt angle adjustment mechanism 100.

When the control unit 3 determines that the mechanism that is driven needs to be changed to the tilt angle adjustment mechanism 100, the control unit 3 supplies a first motor current Ia of which the sign is inverted at a predetermined time interval ta as a switching current Ik. That is, where the reverse rotation and forward rotation of the motor (first motor) 2, caused by the first motor current Ia, are set as a rotation direction alternate switching operation, the rotation direction alternate switching operation is repeatedly performed a predetermined number of times.

The reverse rotation of the motor 2 indicates rotation in a direction opposite to a direction in which the motor 2 has been rotating in a state before the above determination result is obtained. That is, when the motor 2 has been rotating in a first rotation direction in the previous state, rotation in a second rotation direction corresponds to the reverse rotation. When the motor 2 has been rotating in the second rotation direction in the previous state, rotation in the first rotation direction corresponds to the reverse rotation.

The forward rotation of the motor 2 indicates rotation in the same direction as the direction in which the motor 2 has been rotating in a state before the above determination result is obtained. That is, when the motor 2 has been rotating in the first rotation direction in the previous state, rotation in the first rotation direction corresponds to the forward rotation. When the motor 2 has been rotating in the second rotation direction in the previous state, rotation in the second rotation direction corresponds to the forward rotation.

The control unit 3 continues supplying the switching current Ik over a predetermined period tm. When a predetermined time interval tb has elapsed after supply of the switching current Ik is completed, a positive second motor current Ib that moves the rotating member 331 toward the tilt rotation transmission member 332 is supplied to the changing motor (second motor, not shown). After the mechanism that is driven is changed to the tilt angle adjustment mechanism 100, supply of the positive second motor current Ib is stopped.

After supply of the positive second motor current Ib is stopped, when the tilt operation signal Sa has been continuously detected and an increase in tilt angle is indicated as an adjustment direction, the positive first motor current Ia is supplied to the motor 2.

After supply of the positive second motor current Ib is stopped, when the tilt operation signal Sa has been continuously detected and a reduction in tilt angle is indicated as an adjustment direction, the negative first motor current Ia is supplied to the motor 2. The absolute value of the first motor current Ia at the time when the tilt angle is increased or reduced is set to the same magnitude.

When the control unit 3 determines that the mechanism that is driven needs to be changed to the telescopic mechanism 200, the first motor current Ia of which the sign is inverted at the predetermined time interval ta as in the case at the time when the mechanism that is driven is changed to the tilt angle adjustment mechanism 100 is supplied as the switching current Ik. After the predetermined time interval tb has elapsed after supply of the switching current Ik is completed, the negative second motor current Ib that moves the rotating member 331 toward the telescopic rotation transmission member 333 is supplied.

After supply of the negative second motor current Ib is stopped, when the telescopic operation signal Sb has been continuously detected and forward displacement of a telescopic position is indicated as an adjustment direction, the positive first motor current Ia is supplied to the motor 2.

After supply of the negative second motor current Ib is stopped, when the telescopic operation signal Sb has been continuously detected and reverse displacement of the telescopic position is indicated as an adjustment direction, the negative first motor current Ia is supplied to the motor 2. The absolute value of the first motor current Ia at the time when the telescopic position is moved forward or rearward is set to the same magnitude.

When the control unit 3 has detected the tilt operation signal Sa at the first coupling position or when the control unit 3 has detected the telescopic operation signal Sb at the second coupling position, the control unit 3 determines that the mechanism that is driven does not need to be changed. When the control unit 3 determines that the mechanism that is driven does not need to be changed, the control unit 3 supplies the first motor current Ia having a sign corresponding to the adjustment direction indicated by the tilt operation signal Sa or the telescopic operation signal Sb without supplying the switching current Ik and the second motor current Ib.

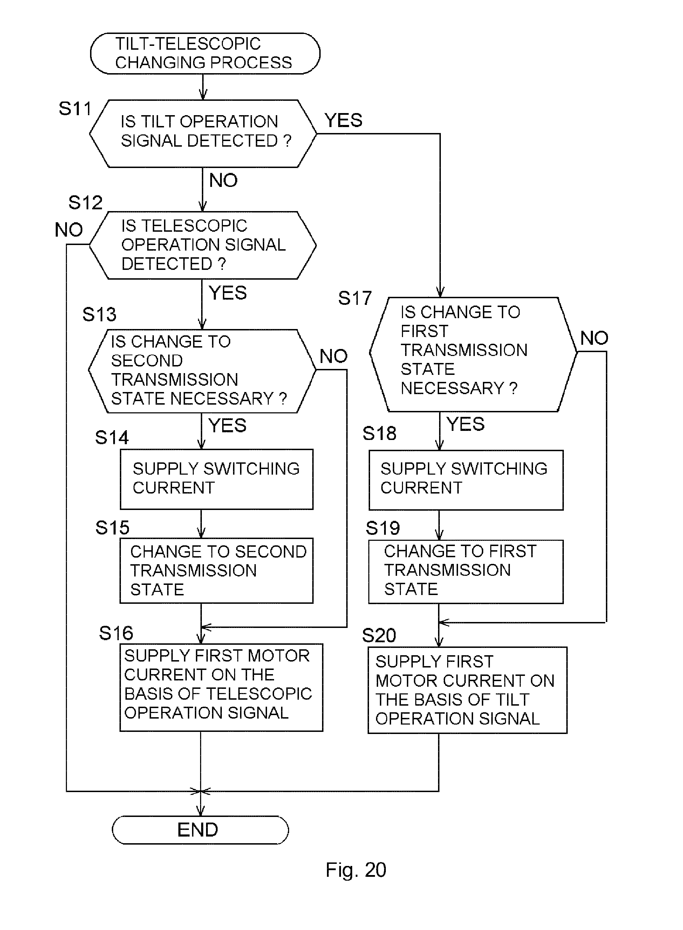

The details of a tilt-telescopic changing process will be described with reference to FIG. 20. The control unit 3 repeatedly executes this process at a predetermined control cycle. That is, after the process has reached the end step, execution of the process of step S11 is suspended until the predetermined control cycle elapses, and the process of step S11 is executed again when the predetermined control cycle has elapsed.

In step S11, it is determined whether the tilt operation signal Sa has been detected. When an affirmative determination is made in step S11, the process proceeds to step S17. On the other hand, when a negative determination is made in step S11, the process proceeds to step S12.

In step S12, it is determined whether the telescopic operation signal Sb has been detected. When an affirmative determination is made in step S12, the process proceeds to step S13. On the other hand, when a negative determination is made in step S12, the process once ends.

In step S13, it is determined whether it is necessary to change the coupling position from the first coupling position to the second coupling position. That is, it is determined whether the mechanism that is driven needs to be changed from the tilt angle adjustment mechanism 100 to the telescopic mechanism 200. When an affirmative determination is made in step S13, the process proceeds to step S14. On the other hand, when a negative determination is made in step S13, the process skips step S14 and step S15 and proceeds to step S16.

In step S14, the switching current Ik is supplied to the motor 2. That is, the operation for switching the rotation direction of the motor 2 between the reverse direction and the forward direction is executed multiple times.

In step S15, the negative second motor current Ib is supplied to the changing motor. That is, the position of the rotating member 331 is changed from the first coupling position to the second coupling position.

In step S16, the first motor current Ia having a sign corresponding to the adjustment direction of the telescopic mechanism 200, which is indicated by the telescopic operation signal Sb, is supplied to the motor 2. That is, the telescopic mechanism 200 is driven in a direction based on operation of the operating unit (not shown).

In step S17, it is determined whether it is necessary to change from the second coupling position to the first coupling position. That is, it is determined whether the mechanism that is driven needs to be changed from the telescopic mechanism 200 to the tilt angle adjustment mechanism 100. When an affirmative determination is made in step S17, the process proceeds to step S18. On the other hand, when a negative determination is made in step S17, the process skips step S18 and step S19 and proceeds to step S20.

In step S18, the switching current Ik is supplied to the motor 2. That is, the operation for switching the rotation direction of the motor 2 between the reverse direction and the forward direction is executed multiple times.

In step S19, the positive second motor current Ib is supplied to the changing motor. That is, the position of the rotating member 331 is changed from the second coupling position to the first coupling position.

In step S20, the first motor current Ia having a sign corresponding to the adjustment direction of the tilt angle adjustment mechanism 100, which is indicated by the tilt operation signal Sa, is supplied to the motor 2. That is, the tilt angle adjustment mechanism 100 is driven in a direction based on operation of the operating unit.

The steering apparatus 1 according to the present embodiment has the following advantageous effects.
(1) The drive mechanism 4 includes the motor 2, the rotating member 331, the tilt rotation transmission member 332 and the selector mechanism 400 that changes the position of the rotating member 331 relative to the tilt rotation transmission member 332. The rotating member 331 is coupled to the tilt rotation transmission member 332 when the position of the rotating member 331 relative to the tilt rotation transmission member 332 is the first coupling position, and the rotation member 331 is separated from the tilt rotation transmission member 332 when the position of the rotating member 331 relative to the tilt rotation transmission member 332 is the second coupling position. The rotating member 331 has the tilt protrusions 335A that protrude toward the tilt rotation transmission member 332, and the tilt rotation transmission member 332 has the tilt pin holes 332A into which the tilt protrusions 335A are inserted. The selector mechanism 400 moves the rotating member 331 located at the second coupling position to the first coupling position, thereby inserting the tilt protrusions 335A into the tilt pin holes 332A, and moves the rotating member 331 located at the first coupling position to the second coupling position, thereby removing the tilt protrusions 335A from the tilt pin holes 332A. Thus, as the selector mechanism 400 inserts the tilt protrusions 335A into the tilt pin holes 332A, the tilt protrusions 335A and the tilt pin holes 332A are engageable with each other, that is, the rotating member 331 is coupled to the tilt rotation transmission member 332. When the rotating member 331 is located at the first coupling position, the tilt rotation transmission member 332 rotates together with the rotating member 331. Thus, the power output from the motor 2 is transmitted to the tilt angle adjustment mechanism 100. Therefore, in comparison with the configuration in which the planetary gear mechanism is used, it is possible to transmit the rotation of the motor 2 to the tilt angle adjustment mechanism 100 with a simple configuration. In addition, as the selector mechanism 400 removes the tilt protrusions 335A from the tilt pin holes 332A, the rotating member 331 is separated from the tilt rotation transmission member 332. Therefore, it is possible to interrupt transmission of the power output from the motor 2.

(2) The drive mechanism 4 includes the motor 2, the rotating member 331, the telescopic rotation transmission member 333 and the selector mechanism 400 that changes the position of the rotating member 331 relative to the telescopic rotation transmission member 333. The rotating member 331 is coupled to the telescopic rotation transmission member 333 when the position of the rotating member 331 relative to the telescopic rotation transmission member 333 is the second coupling position, and the rotating member 331 is separated from the telescopic rotation transmission member 333 when the position of the rotating member 331 relative to the telescopic rotation transmission member 333 is the first coupling position. The rotating member 331 has the telescopic protrusions 335B that protrude toward the telescopic rotation transmission member 333, and the telescopic rotation transmission member 333 has the telescopic pin holes 333A into which the telescopic protrusions 335B are inserted. The selector mechanism 400 moves the rotating member 331 located at the first coupling position to the second coupling position, thereby inserting the telescopic protrusions 335B into the telescopic pin holes 333A, and moves the rotating member 331 located at the second coupling position to the first coupling position, thereby removing the telescopic protrusions 335B from the telescopic pin holes 333A. Thus, as the selector mechanism 400 inserts the telescopic protrusions 335B into the telescopic pin holes 333A, the telescopic protrusions 335B and the telescopic pin holes 333A are engageable with each other, that is, the rotating member 331 is coupled to the telescopic rotation transmission member 333. When the rotating member 331 is located at the second coupling position, the telescopic rotation transmission member 333 rotates together with the rotating member 331, the power output from the motor 2 is transmitted to the telescopic mechanism 200. Therefore, in comparison with the configuration in which the planetary gear mechanism is used, it is possible to transmit the rotation of the motor 2 to the telescopic mechanism 200 with a simple configuration. In addition, as the selector mechanism 400 removes the telescopic protrusions 335B from the telescopic pin holes 333A, the rotating member 331 is separated from the telescopic rotation transmission member 333. Therefore, it is possible to interrupt transmission of the power output from the motor 2.

(3) The rotating member 331 has the tilt protrusions 335A that protrude toward the tilt rotation transmission member 332 and the telescopic protrusions 335B that protrude toward the telescopic rotation transmission member 333, and the tilt protrusions 335A and the telescopic protrusions 335B are formed of the columnar pins 335. Therefore, in comparison with the case where the tilt protrusions 335A and the telescopic protrusions 335B are formed of separate components, it is possible to reduce the number of components.

(4) The rotating member 331 is coupled to both the tilt rotation transmission member 332 and the telescopic rotation transmission member 333 when the rotating member 331 is located at the double coupling position, and the selector mechanism 400 moves the rotating member 331 located at the second coupling position to the first coupling position or the double coupling position, and moves the rotating member 331 located at the first coupling position to the second coupling position or the double coupling position. Thus, as the selector mechanism 400 moves the rotating member 331 located at the first coupling position or the second coupling position to the double coupling position, it is possible to transmit the power output from the motor 2 to the tilt angle adjustment mechanism 100 and the telescopic mechanism 200 at the same time.

(5) When the rotating member 331 is located at the double coupling position and the motor 2 rotates in one direction, the tilt angle adjustment mechanism 100 moves the position of the steering wheel upward in the up-down direction of the vehicle, and the telescopic mechanism 200 moves the position of the steering wheel toward the front of the vehicle in the longitudinal direction of the vehicle. Therefore, for example, in comparison with the configuration where the position of the steering wheel is moved upward in the up-down direction of the vehicle and the steering wheel is moved toward the rear of the vehicle by rotating the motor 2 in one direction, it is possible to quickly increase the clearance between the driver and the steering apparatus 1.

(6) When the rotating member 331 and the motor 2 complete adjustment of the tilt angle or adjustment of the telescopic position, the rotating member 331 and the motor 2 are connected to each other via the second rotary shaft 320. With this configuration, friction force of a portion at which the rotating member 331 and the spur gear 323 are in mesh with each other acts as resistance against force that changes the tilt angle or telescopic position of the steering shaft 20. Therefore, in comparison with the configuration where the rotating member 331 and the motor 2 are not connected to each other, tilt rotation resistance and telescopic rotation resistance increase. Thus, a change in tilt angle or telescopic position of the steering shaft 20 in response to an input load is less likely to occur.

(7) The control unit 3 executes at least one of control A and control B. In the control A, when the rotating member 331 has been moved to the tilt rotation transmission member 332 and is located at the first coupling position, the motor 2 is rotated in the reverse direction and then the rotating member 331 is moved to the telescopic rotation transmission member 333 and the coupling position of the rotating member 331 is changed to the second coupling position. In the control B, when the rotating member 331 has been moved to the telescopic rotation transmission member 333 and is located at the second coupling position, the motor 2 is rotated in the reverse direction and then the coupling position of the rotating member 331 is changed to the first coupling position.

When the motor 2 rotates in the reverse direction at the first coupling position, force that changes the rotation direction of the rotating member 331 relative to the tilt rotation transmission member 332 to a direction opposite to the direction in which the motor 2 has been rotated is applied to the rotating member 331. Therefore, when the rotating member 331 is inclined relative to the tilt rotation transmission member 332, it is highly likely that the inclination will be eliminated. Similarly, when the rotating member 331 is inclined relative to the telescopic rotation transmission member 333, it is highly likely that the inclination will be eliminated. When the inclination between the tilt rotation transmission member 332 or telescopic rotation transmission member 333 and the rotating member 331 is eliminated, application of a large load to a changing electric motor that is required to execute the control A or the control B is suppressed, in comparison with the case where the inclination is not eliminated.

(8) In at least one of the control A and the control B, which is executed by the control unit 3, when an operation for rotating the motor 2 in the reverse direction and the forward direction is set as a rotation direction alternate switching operation, the rotation direction alternate switching operation is executed multiple times and then the rotating member 331 is moved toward the tilt rotation transmission member 332 or the telescopic rotation transmission member 333.

The inclination of the rotating member 331 with respect to the tilt rotation transmission member 332 or telescopic rotation transmission member 333 may not be eliminated only by rotating the motor 2 in the reverse direction once. With this configuration, because the rotation direction alternate switching operation of the motor 2 is performed multiple times, it is further highly likely that the inclination will be eliminated.

The scope of the invention includes an embodiment other than the above-described embodiment. Hereinafter, embodiments alternative to the above-described embodiment will be described as other embodiments of the invention. The following alternative embodiments may be implemented in combination with each other.

The rotating member 331 according to the above-described embodiment has the columnar tilt protrusions 335A and telescopic protrusions 335B. On the other hand, as shown in FIG. 17A, a rotating member 336 according to an alternative embodiment may have rectangular parallelepiped-shaped tilt protrusions 336A and rectangular parallelepiped-shaped telescopic protrusions 336B. The tilt protrusions 336A are located at a side face 336C of the rotating member 336, which faces a tilt rotation transmission member (not shown). The telescopic protrusions 336B are located at a side face 336D of the rotating member 336, which faces a telescopic rotation transmission member (not shown). The rotating member 336 has an insertion hole 336E into which the support shaft 330 is inserted.

As shown in FIG. 17B, the four tilt protrusions 336A that extend in the radial direction of the rotating member 336 are arranged at equal intervals along the circumference of the insertion hole 336E. As shown in FIG. 17C, the four telescopic protrusions 336B that extend in the radial direction of the rotating member 336 are arranged at equal intervals along the circumference of the insertion hole 336E. The tilt rotation transmission member has recessed portions (not shown) having faces parallel to the rotation axis of the rotating member 336. The tilt protrusions 336A are fitted to the recessed portions. The telescopic rotation transmission member has recessed portions (not shown) having faces parallel to the rotation axis of the rotating member 336. The telescopic protrusions 336B are fitted to the recessed portions. With the above configuration, the selector mechanism 400 (FIG. 8) is placed in the tilt coupling state by inserting the tilt protrusions 336A into the recessed portions of the tilt rotation transmission member. In addition, the selector mechanism 400 is placed in the telescopic coupling state by inserting the telescopic protrusions 336B into the recessed portions of the telescopic rotation transmission member. That is, the protruded portions are not limited to the columnar protrusions 335A, 335B, and the shapes of the protruded portions and recessed portions that engage with each other at faces parallel to the rotation axis of the rotating member 331 may be changed.

In the steering apparatus 1 according to the above-described embodiment (FIG. 1), the rotating member 331 has the tilt protrusions 335A, and the tilt rotation transmission member 332 has the tilt pin holes 332A. On the other hand, in a steering apparatus according to an alternative embodiment, the rotating member 331 may have tilt pin holes (not shown), and the tilt rotation transmission member 332 may have tilt pins (not shown). That is, the rotating member 331 may include recessed portions having faces parallel to the rotation axis of the rotating member 331, and the tilt rotation transmission member 332 may include protruded portions having faces parallel to the rotation axis of the rotating member 331.

In the steering apparatus 1 according to the above-described embodiment (FIG. 1), the rotating member 331 has the telescopic protrusions 335B, and the telescopic rotation transmission member 333 has the telescopic pin holes 333A. On the other hand, in a steering apparatus according to an alternative embodiment, the rotating member 331 may have tilt pin holes (not shown), and the telescopic rotation transmission member 333 may have telescopic pins (not shown). That is, the rotating member 331 may include recessed portions having faces parallel to the rotation axis of the rotating member 331, and the telescopic rotation transmission member 333 may include protruded portions having faces parallel to the rotation axis of the rotating member 331.

The support shaft 330 according to the above-described embodiment (FIG. 1) supports the telescopic rotation transmission member 333 and the rotating member 331 such that the telescopic rotation transmission member 333 and the rotating member 331 are rotatable relative to each other, and rotates together with the tilt rotation transmission member 332. On the other hand, the support shaft 330 according to an alternative embodiment may support the tilt rotation transmission member 332 and the rotating member 331 such that the tilt rotation transmission member 332 and the rotating member 331 are rotatable relative to each other, and may rotate together with the telescopic rotation transmission member 333. That is, the configuration of the support shaft 330 that is not fixed to the tilt rotation transmission member 332 may be employed.

The selector mechanism 400 according to the above-described embodiment (FIG. 1) includes the electric motor that moves the slider 410. On the other hand, the selector mechanism 400 according to an alternative embodiment may be configured to change the position of the rotating member 331 by moving the slider 410 with force of an operator who operates the external protrusion 414 of the slider 410.

The selector mechanism 400 according to the above-described embodiment (FIG. 1) couples the rotating member 331 to the tilt rotation transmission member 332 and the telescopic rotation transmission member 333 at the same time by changing the coupling state to the double coupling state. On the other hand, the selector mechanism 400 according to an alternative embodiment may change the coupling state among the tilt coupling state, the telescopic coupling state and a non-coupling state where the rotating member 331 is coupled to neither the tilt rotation transmission member 332 nor the telescopic rotation transmission member 333. In this case, the size L1 of each pin 335 in the axial direction A is smaller than the length L2 of the clearance between the tilt rotation transmission member 332 and the telescopic rotation transmission member 333 that faces each other in the axial direction A.

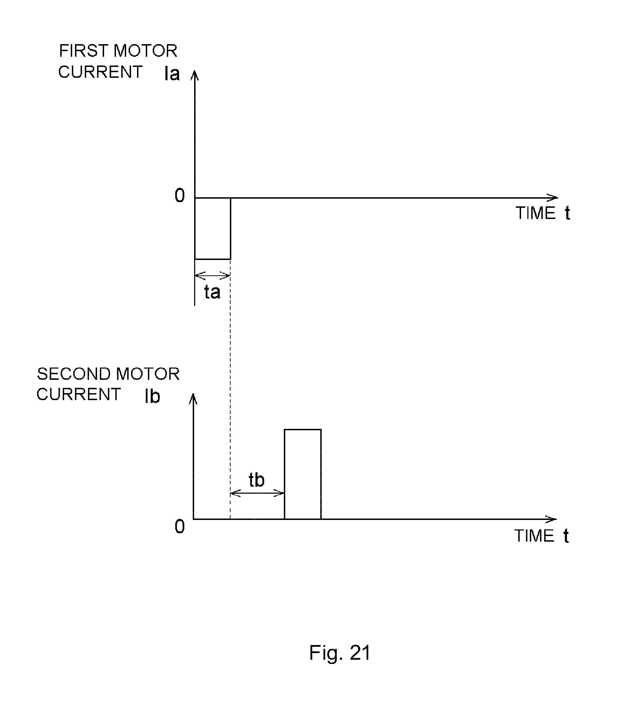

In the above-described embodiment, the switching current Ik of which the sign is inverted at the time interval ta is supplied. Alternatively, there may be employed a configuration in which the sign of the first motor current Ia immediately before the drive mechanism is switched is stored and then the first motor current Ia that is supplied during the time interval ta with a sign that is definitely opposite to the stored sign is set as the switching current Ik at the time when the drive mechanism is switched. FIG. 21 shows the switching current Ik at the time when the positive first motor current Ia is supplied before the mechanism that is driven is changed to the tilt angle adjustment mechanism 100, and shows the positive second motor current Ib that is supplied at the time when the time interval tb has elapsed after the switching current Ik is supplied in order to change the mechanism that is driven to the tilt angle adjustment mechanism 100.

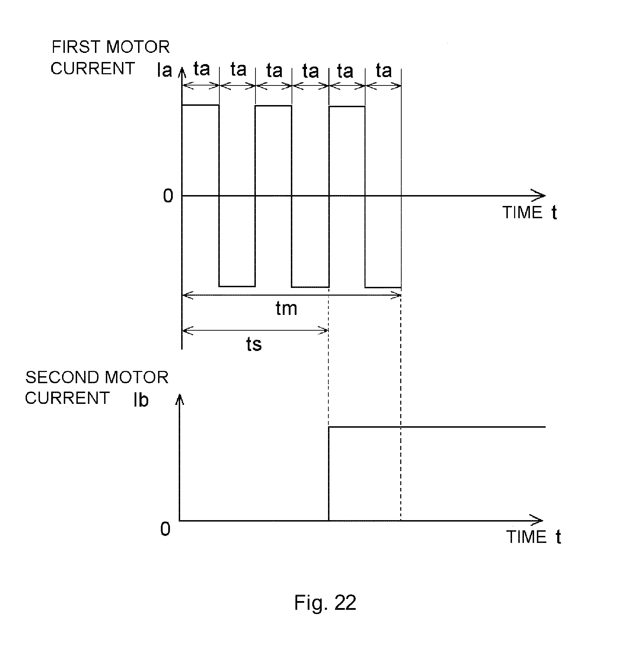

In the above-described embodiment, the rotating member 331 is moved by supplying the second motor current Ib at the time when the time interval tb has elapsed from when supply of the switching current Ik is completed. Alternatively, the rotating member 331 may be moved by supplying the second motor current Ib while the switching current Ik is being supplied. That is, the rotating member 331 may be moved while the rotation direction alternate switching operation of the motor 2 is being executed. FIG. 22 is a timing chart at the time when supply of the positive second motor current Ib is started when a time interval ts that is shorter than a predetermined period tm has elapsed from a start of supply of the switching current Ik. When the transmission state of the rotating member 331 is changed while the rotation direction alternate switching operation of the motor 2 is being executed, start of the operation for changing the transmission state is advanced in comparison with the case where changing the transmission state of the rotating member 331 is started after the rotation direction alternate switching operation of the motor 2 is executed.

As shown in FIG. 23, a selector mechanism may be configured to move a selector member 60 with the use of a solenoid 90. With this configuration, the selector mechanism 80 changes a selected position of the selector member 60 to one of a first coupling position to a third coupling position.

The selector mechanism 80 includes a body housing 81, an operating unit 82 and a coil spring 83. The body housing 81 accommodates the solenoid 90. The operating unit 82 changes the position of the solenoid 90 relative to the body housing 81. The coil spring 83 applies force, which moves the solenoid 90, to the solenoid 90.

The body housing 81 has a cylindrical shape of which one end is open. The operating unit 82 includes a push button 82A and a support member 82B that supports movement of the push button 82A. The coil spring 83 connects the bottom of the body housing 81 to an end portion of the solenoid 90, which faces the bottom of the body housing 81.

The solenoid 90 includes a solenoid housing 91, a movable member 92, a coil 93, and a coil spring 94. The solenoid housing 91 constitutes a body. The movable member 92 moves relative to the solenoid housing 91. The coil 93 moves the movable member 92. The coil spring 94 supplies the movable member 92 with force in a direction opposite to the direction in which the movable member 92 is moved by the coil 93.

The movable member 92 has a shaft 92A and a slider 92B. The shaft 92A receives moving force with which the shaft 92A is moved relative to the solenoid housing 91 by the coil 93. The slider 92B is connected to the selector member 60. The slider 92B is fixed to the distal end portion of the shaft 92A.

The coil spring 94 connects an end portion of the solenoid housing 91, on the slider 92B side, and the slider 92B to each other. An ECU 15 supplies electric power to the coil 93 at the time of an engine start of the vehicle. During an engine stop, supply of electric power is stopped.

The positional relationship among the components of the selector mechanism 80 will be described. Hereinafter, the position of the solenoid 90 at the time when the push button 82A is in an off state, that is, when the coil spring 83 has a natural length, is referred to as a first solenoid position, and the position of the solenoid 90 at the time when the push button 82A is in an on state, that is, when the coil spring 83 is compressed, is referred to as a second solenoid position. The position of the slider 92B at the time when electric power is supplied to the coil 93, that is, when the coil spring 94 has a natural length, is referred to as a first slider position, and the position of the slider 92B at the time when no electric power is supplied to the coil 93, that is, when the coil spring 94 is compressed, is referred to as a second slider position.

As shown in FIG. 23A, in the selector mechanism 80, when the solenoid 90 is in the first solenoid position and the slider 92B is in the second slider position, the selector mechanism 80 sets the selected position of the selector member 60 to the third coupling position. As shown in FIG. 23B, in the selector mechanism 80, when the solenoid 90 is in the second solenoid position and the slider 92B is in the second slider position, the selector mechanism 80 sets the selected position of the selector member 60 to the first coupling position. As shown in FIG. 23C, in the selector mechanism 80, when the solenoid 90 is in the first solenoid position and the slider 92B is in the first slider position, the selector mechanism 80 sets the selected position of the selector member 60 to the second coupling position.

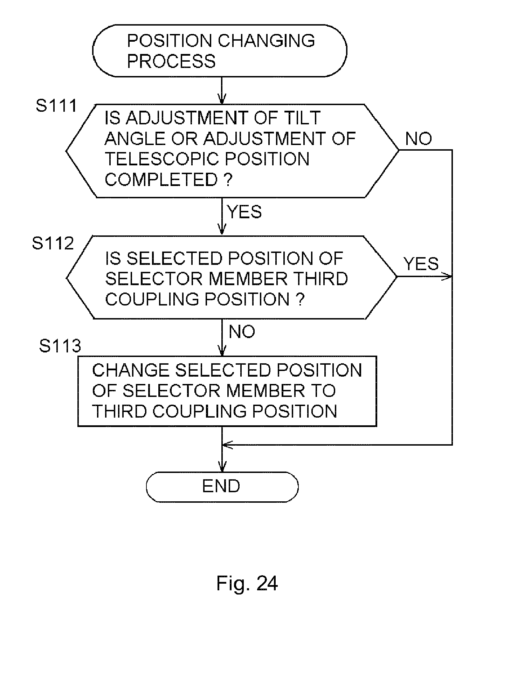

The procedure of position changing process will be described with reference to FIG. 24. In this process, it is determined whether a condition for changing the selected position of the selector member 60 to the third coupling position is satisfied, on the basis of conditions in the following step S111 and step S112. In step S111, it is determined whether adjustment of the tilt angle or adjustment of the telescopic position is completed. In step S112, it is determined whether the selected position of the selector member 60 is the third coupling position. In step S112, when a target rotation angle at the time when the selected position of the selector member 60 is the third coupling position coincides with a detected rotation angle, it is determined that the selected position of the selector member 60 is the third coupling position.

When an affirmative determination is made in step S111 and a negative determination is made in step S112, it is determined that the condition for changing the selected position of the selector member 60 to the third coupling position is satisfied. In step S113, the selected position of the selector member 60 is changed to the third coupling position.

On the other hand, when a negative determination is made in step S111 or when an affirmative determination is made in each of step S111 and step S112, it is determined that the condition for changing the selected position of the selector member 60 to the third coupling position is not satisfied.

The steering apparatus 1 according to the present embodiment has the following advantageous effects. (1) When adjustment of the tilt angle is completed, the control unit 15 changes the selected position of the selector member 60 from the first coupling position to the third coupling position. When adjustment of the telescopic position is completed, the control unit 15 changes the selected position of the selector member 60 from the second coupling position to the third coupling position. Thus, a change in tilt angle or telescopic position in response to an input load is less likely to occur. Unlike in the configuration where friction force is increased by increasing the outside diameter of a screw shaft of a tilt mechanism, the inside diameter of a nut of the tilt mechanism, the outside diameter of a screw shaft of a telescopic mechanism and the inside diameter of a nut of the telescopic mechanism, it is possible to use a compact driving electric motor.

(2) The steering wheel 2 may receive an excess load from the driver. An example of an excess load is a load generated at the time when the driver contacts the steering wheel 2 as a result of a collision of the vehicle. On the other hand, when an excess load is input into the steering wheel 2, the driver may receive excessively large reaction force from the steering wheel 2. Therefore, when an excess load acts on the steering wheel 2, desirably, the telescopic position significantly changes to an opposite side with respect to a driver seat, unlike in the case where a normal input load acts on the steering wheel 2.

The steering apparatus 1 includes the tilt mechanism 12 and the telescopic mechanism 13. In the tilt mechanism 12, the tilt angle is increased upward in response to an input load. In the telescopic mechanism 13, the telescopic position is displaced forward in response to an input load. With this configuration, when an excess load acts on the steering wheel 2, a increase in the tilt angle downward is suppressed, so the component of force for displacing the telescopic position forward increases. Thus, the telescopic position is significantly displaced forward. Therefore, excessively large reaction force is less likely to act on the driver.

(3) The selector member 60 and the driving electric motor 14 are connected to each other via a first transmission mechanism 21 when adjustment of the tilt angle or adjustment of the telescopic position is completed. With this configuration, friction force of a portion at which the selector member 60 and a spur gear 21C are in mesh with each other acts as resistance against force that changes the tilt angle or telescopic position of the steering shaft 20. Therefore, in comparison with the configuration where the selector member 60 and the driving electric motor 14 are not connected to each other, tilt rotation resistance and telescopic rotation resistance increase. Thus, a change in tilt angle or telescopic position of the steering shaft 20 in response to an input load is less likely to occur.

## Claims

1. A steering apparatus including a tilt mechanism that adjusts a tilt angle of a steering shaft in an up-down direction of a vehicle, a telescopic mechanism that adjusts a telescopic position of the steering shaft in a longitudinal direction of the vehicle, and a drive mechanism that drives the tilt mechanism and the telescopic mechanism, **characterized in that**:
the drive mechanism includes a motor, a rotating member that is rotated by torque of the motor, a rotation transmission member that is coupled to one of the tilt mechanism and the telescopic mechanism, and a selector mechanism that changes a position of the rotating member relative to the rotation transmission member;
the rotating member is coupled to the rotation transmission member when the position of the rotating member relative to the rotation transmission member is a coupling position, and is separated from the rotation transmission member when the position of the rotating member relative to the rotation transmission member is a non-coupling position;
one of the rotating member and the rotation transmission member has a protruded portion that protrudes toward the other one of the rotating member and the rotation transmission member, and the other one of the rotating member and the rotation transmission member has a recessed portion into which the protruded portion is inserted; and
the selector mechanism inserts the protruded portion into the recessed portion by moving the rotating member located at the non-coupling position to the coupling position, and removes the protruded portion from the recessed portion by moving the rotating member located at the coupling position to the non-coupling position.

2. The steering apparatus according to claim 1, wherein:
the drive mechanism includes a first rotation transmission member that is connected to the tilt mechanism and a second rotation transmission member that is connected to the telescopic mechanism, as the rotation transmission member;
the rotating member is located between the first rotation transmission member and the second rotation transmission member;
the rotating member is coupled to only the first rotation transmission member from among the first rotation transmission member and the second rotation transmission member when the rotating member is located at a first coupling position, and is coupled to only the second rotation transmission member from among the first rotation transmission member and the second rotation transmission member when the rotating member is located at a second coupling position; and
between the first rotation transmission member and the second rotation transmission member, the selector mechanism moves the rotating member located at the second coupling position to the first coupling position and moves the rotating member located at the first coupling position to the second coupling position.

3. The steering apparatus according to claim 2, wherein:
one of the rotating member and the first rotation transmission member has a first protruded portion that serves as the protruded portion, and the other one of the rotating member and the first rotation transmission member has a first recessed portion that serves as the recessed portion; and
the selector mechanism inserts the first protruded portion into the first recessed portion by moving the rotating member located at the second coupling position to the first coupling position, and removes the first protruded portion from the first recessed portion by moving the rotating member located at the first coupling position to the second coupling position.

4. The steering apparatus according to claim 3, wherein:
one of the rotating member and the second rotation transmission member has a second protruded portion that serves as the protruded portion, and the other one of the rotating member and the second rotation transmission member has a second recessed portion that serves as the recessed portion; and
the selector mechanism inserts the second protruded portion into the second recessed portion by moving the rotating member located at the first coupling position to the second coupling position, and removes the second protruded portion from the second recessed portion by moving the rotating member located at the second coupling position to the first coupling position.

5. The steering apparatus according to claim 4, wherein:
the rotating member has the first protruded portion that protrudes toward the first rotation transmission member and the second protruded portion that protrudes toward the second rotation transmission member, as the protruded portion, and
the first protruded portion and the second protruded portion each are formed of a columnar pin.

6. The steering apparatus according to any one of claims 2 to 5, wherein:
the rotating member is coupled to both the first rotation transmission member and the second rotation transmission member when the rotating member is located at a double coupling position; and
between the first rotation transmission member and the second rotation transmission member, the selector mechanism moves the rotating member located at the second coupling position to the first coupling position or the double coupling position and moves the rotating member located at the first coupling position to the second coupling position or the double coupling position.

7. The steering apparatus according to claim 6, wherein
when the rotating member is located at the double coupling position and the motor rotates in one direction, the tilt mechanism increases the tilt angle of the steering shaft upward and the telescopic mechanism moves the telescopic position of the steering shaft toward a front of the vehicle.

8. The steering apparatus according to claim 1, wherein
the drive mechanism includes an input rotation transmission member that transmits rotation of an output shaft of the motor to the rotating member, and the rotating member has an external gear that is in mesh with an external gear of the input rotation transmission member.

9. The steering apparatus according to claim 2, wherein
there is executed at least one of control A for moving the rotating member to the second coupling position after rotating the motor in a reverse direction when the rotating member is located at the first coupling position and control B for moving the rotating member to the first coupling position after rotating the motor in the reverse direction when the rotating member is located at the second coupling position.

10. The steering apparatus according to claim 9, wherein
at least one of the control A and the control B moves the rotating member to the second coupling position or the first coupling position after a rotation direction alternate switching operation which is an operation for rotating the motor alternately in the reverse direction and a forward direction is executed multiple times or while the rotation direction alternate switching operation is being executed.

11. The steering apparatus according to claim 2, wherein
a third coupling position at which the rotating member is coupled to the first coupling member and the second coupling member is further provided, and the selector mechanism moves the rotating member to the third coupling position when at least one of adjustment of the tilt angle of the steering shaft and adjustment of the telescopic position of the steering shaft is completed.
